# EUROPEAN PATENT SPECIFICATION

(11) **EP 1 777 614 B1**
(45) Date of publication and mention of the grant of the patent: **08.10.2008**
(21) Application number: 06251126.6
(22) Date of filing: 02.03.2006
(51) Int. Cl.: G06F 3/06, G06F 12/08, G06F 13/16

(54) **Storage system**
Speichersystem
Système de stockage

(30) Priority: 17.10.2005 JP 2005301575
(43) Date of publication of application: 25.04.2007
(73) Proprietor: HITACHI, LTD., Chiyoda-ku Tokyo 100-8280 (JP)
(72) Inventor: Moritoki, Naoki, c/o Hitachi Ltd., Int. Prop.Gr., Chiyoda-ku Tokyo 100-8220 (JP); Minowa, Nobuyuki, c/o Hitachi Ltd. Int. Prop.Gr., Chiyoda-ku Tokyo 100-8220 (JP)
(74) Representative: Hodsdon, Stephen James

(56) References cited:
- US-A- 5 832 304
- US-A1- 2002 194 435
- US-A1- 2003 200 377

## Description

The present invention relates to storage control technology, and more particularly to technology for accessing a memory.

For example, the disk array device disclosed in Japanese Laid-open Patent No. 2000-250713 is known. This disk array device comprises a channel interface unit comprising an interface portion for a host computer; a disk interface unit comprising an interface portion for a disk device; a cache memory unit for temporarily storing data to be stored in a disk device; an access path, which connects the channel interface unit, disk interface unit, and cache memory unit; and means for changing the data transfer speed of the access path.

US 2003/0200377 A1 discloses a disk array control device with two different internal connection systems, including a plurality of channel interface units, a plurality of disk interface units, a cache memory unit, and a shared memory unit. The plurality of channel IF units and the plurality of disk IF units are connected via a selector to the cache memory unit whereas the plurality of channel IF units and the plurality of disk IF units are directly connected to the shared memory unit with no selectors.

US 5,832,304 discloses a memory queue with adjustable priority and conflict detection.

US 2002/0194435 discloses a storage control apparatus for performing access control through a selector.

There are cases in which a storage system typified by a disk array device comprises a host interface device (hereinafter, host I/F), which constitutes an interface for a host, a disk interface device (hereinafter, disk I/F), which constitutes an interface for a disk-type storage device (hereinafter, disk device), a cache memory (hereinafter, CM) for temporarily storing data to be stored in a disk device, plus a shared memory (hereinafter, SM), which can be shared by the respective I/F.

An SM, for example, is used to receive commands between a microprocessor (hereinafter, MP) mounted in one I/F and an MP mounted in another I/F. More specifically, for example, a first MP on a certain I/F writes a command addressed to a second MP on another I/F to the SM, and the second MP reads this command from the SM.

Further, the SM, for example, stores information for managing the CM, and information related to the constitution of the storage system. Information stored in the SM is referenced as needed by the respective I/F.

There is a need to lower the cost of storage systems. As a method for doing so, one thing that can be done is to integrate the physically separated SM and CM into one unit. However, doing so raises concerns about the degradation of storage system performance.

The need to hold the degradation of storage system performance in check, and to enhance this performance, without necessarily integrating the SM and CM into one unit, can also be considered.

Therefore, an object of the present invention is to reduce the cost of a storage system.

Another object of the present invention is to suppress the degradation of storage system performance, and/or enhance this performance.

Other objects of the present invention should become clear from the following explanation.

A storage system in accordance with an aspect of the present invention comprises a memory; a plurality of access portions for accessing the above-mentioned memory; a memory interface unit for controlling access from the above-mentioned plurality of access portions to the above-mentioned memory; and a plurality of types of paths for communicatively connecting the respective access portions to the above-mentioned memory interface unit. The above-mentioned plurality of types of paths comprises a response-type path and a throughput-type path. The above-mentioned response-type path is a path via which the amount of information capable of being transferred within the same period of time is less than that of the above-mentioned throughput-type path, but the length of time from when information is sent until a response thereto is received is shorter than that of the above-mentioned throughput-type path. The above-mentioned throughput-type path is a path via which the length of time from when information is sent until a response thereto is received is longer than that of the above-mentioned response-type path, but the amount of information that it is capable of being transferred within the same period of time is greater than that of the above-mentioned response-type path. The above-mentioned memory interface unit comprises an arbiter which places a priority on an access to said memory via said response-type path over an access to said memory via said throughput-type path, thereby preferentially allowing access to said memory via said response-type path over access to said memory via said throughput-type path.

In a first aspect of the present invention, the above-mentioned memory interface unit can preferentially allow access via the above-mentioned response-type path at a prescribed ratio. More specifically, for example, whenever the number of times that the above-mentioned memory interface unit preferentially allows access via the above-mentioned response-type path reaches a predetermined number of times, it can allow access via the above-mentioned throughput-type path without preferentially allowing access via the above-mentioned response-type path.

Further, in this first aspect, the above-mentioned memory interface unit can calculate the statistics of a communication pattern via at least one of the above-mentioned response-type path and the above-mentioned throughput-type path, determine a ratio corresponding to the calculated statistics, and allow the above-mentioned determined ratio to be the above-mentioned prescribed ratio. More specifically, for example, when the above-mentioned memory interface unit receives information via at least one of the above-mentioned response-type path and the above-mentioned throughput-type path, it can determine at least one of the above-mentioned received information type, size, or reception time, and in accordance with the results of that determination, update at least one of the number of times each type of information is received, number of times each size range of information is received, and the frequency at which the information is received, and calculate the above-mentioned statistics based on at least one of the number of times each type of information is received, the number of times each size range of information is received, and the frequency at which the information is received.

Furthermore, in this case, a first storage area and a second storage area can be provided in the above-mentioned memory. Information received via the above-mentioned response-type path, and either a command or a response can be stored in the above-mentioned first storage area. Information received via the above-mentioned throughput-type path, and data stored in a disk-type storage device can be stored in the above-mentioned second storage area. The sizes of the above-mentioned first storage area and second storage area can dynamically change to a size corresponding to the above-mentioned determined ratio.

In a second aspect of the present invention, between the above-mentioned plurality of access portions and the above-mentioned memory interface unit, there can be no switch on the above-mentioned response-type path, or the number of switches on the above-mentioned response-type path is less than the number of switches on the above-mentioned throughput-type path.

In a third aspect of the present invention, the number of the above-mentioned response-type paths can be larger than the number of the above-mentioned throughput-type paths.

In a fourth aspect of the present invention, the above-mentioned storage system can be communicatively connected to an external device, which is a device that exists external thereto. The above-mentioned storage system can comprise a cache memory; a cache memory adapter, which controls access to the above-mentioned cache memory; a disk-type storage device; a channel adapter, which is communicatively connected to the above-mentioned external device; and a disk adapter, which is communicatively connected to the above-mentioned disk-type storage device. The above-mentioned channel adapter and the above-mentioned disk adapter can write either a command or a response for another channel adapter or disk adapter to the above-mentioned cache memory by sending the command or response to the above-mentioned cache memory adapter via the above-mentioned response-type path, and/or can receive from the above-mentioned cache memory adapter via the above-mentioned response-type path either a command or a response which is written to the above-mentioned cache memory and addressed to the channel adapter and the disk adapter itself. Further, the above-mentioned channel adapter and the above-mentioned disk adapter can write the above-mentioned data to the above-mentioned cache memory by sending the data to the above-mentioned cache memory adapter via the above-mentioned throughput-type path, and/or can receive the above-mentioned data, which is written to the above-mentioned cache memory, from the above-mentioned cache memory adapter via the above-mentioned response-type path. Each of the above-mentioned plurality of access portions can be either the above-mentioned channel adapter or the above-mentioned disk adapter. The above-mentioned memory can be the above-mentioned cache memory. The above-mentioned memory interface unit can be the above-mentioned cache memory adapter.

In a fifth aspect of the present invention, the above-mentioned storage system can be communicatively connected to an external device, which is a device that exists external thereto. The above-mentioned storage system can comprise a cache memory; a disk-type storage device; a channel adapter, which can receive data from the above-mentioned external device and write the data to the above-mentioned cache memory, and/or can acquire data from the above-mentioned cache memory, and send the data to the above-mentioned external device; and a disk adapter, which can acquire data written to the above-mentioned cache memory, and write the data to the above-mentioned disk-type storage device, and/or can acquire data from the above-mentioned disk-type storage device, and write the data to the above-mentioned cache memory. The above-mentioned channel adapter and the above-mentioned disk adapter can comprise a microprocessor; a local memory; and a path interface unit connected to the above-mentioned plurality of types of paths. Each of the above-mentioned plurality of access portions can be the above-mentioned microprocessor. The above-mentioned memory can be the above-mentioned local memory, which is mounted in either another channel adapter or disk adapter, for the above-mentioned microprocessor. The above-mentioned memory interface unit can be the above-mentioned path interface unit, which is mounted in either another channel adapter or disk adapter, for the above-mentioned microprocessor.

In a sixth aspect of the present invention, the above-mentioned storage system can comprise a disk-type storage device. Each of the above-mentioned plurality of access portions can make a determination as to whether or not information comprises data to be written to the above-mentioned disk-type storage device, and/or can make a determination as to whether or not the size of the above-mentioned information is a predetermined value or more. Further, when the results of the above-mentioned determinations indicate that the information comprises data to be written to the above-mentioned disk-type storage device, and/or that the size of the above-mentioned information is the predetermined value or more, each of the above-mentioned plurality of access portions can send the above-mentioned information to the above-mentioned memory interface unit via the above-mentioned throughput-type path. Further, when the results of the above-mentioned determinations indicate that the information does not comprise data to be written to the above-mentioned disk-type storage device, and/or that the size of the above-mentioned information is less than the predetermined value, each of the above-mentioned plurality of access portions can send the above-mentioned information to the above-mentioned memory interface unit via the above-mentioned response-type path.

In a seventh aspect of the present invention, the above-mentioned storage system can comprise a disk-type storage device. The above-mentioned memory interface unit can make a determination as to whether or not information comprises data, which is stored in the above-mentioned disk-type storage device, and/or can make a determination as to whether or not the size of the above-mentioned information is a predetermined value or more. Further, when the results of the above-mentioned determinations indicate that the information comprises data stored in the above-mentioned disk-type storage device, and/or that the size of the above-mentioned information is the predetermined value or more, the above-mentioned memory interface unit can send the above-mentioned information to at least one access portion via the above-mentioned throughput-type path. Further, when the results of the above-mentioned determinations indicate that the information does not comprise data stored in the above-mentioned disk-type storage device, and/or that the size of the above-mentioned information is less than the predetermined value, the above-mentioned memory interface unit can send the above-mentioned information to at least one access portion via the above-mentioned response-type path.

In an eighth aspect of the present invention, information received via the above-mentioned response-type path, and information received via the above-mentioned throughput-type path can be mixed in the same region of the above-mentioned memory, or either a command or a response, and data to be stored in a disk-type storage device can be mixed in the same region of the above-mentioned memory.

In a ninth aspect of the present invention, a first storage area and a second storage area can be provided in the above-mentioned memory. Information received via the above-mentioned response-type path, or either a command or a response can be stored in the above-mentioned first storage area. Information received via the above-mentioned throughput-type path, or data to be stored in a disk-type storage device can be stored in the above-mentioned second storage area. The respective sizes of the above-mentioned first storage area and second storage area can be either fixed or variable.

In a tenth aspect of the present invention, a first storage area, a second storage area, and a third storage area can be provided in the above-mentioned memory. Information received via the above-mentioned response-type path, or either a command or a response can be stored in the above-mentioned first storage area. Information received via the above-mentioned throughput-type path, or data to be stored in a disk-type storage device can be stored in the above-mentioned second storage area. Either all or a part of the above-mentioned third storage area can be dynamically allocated to the above-mentioned first storage area and/or the above-mentioned second storage area, or, either all or a part of the above-mentioned third storage area can be dynamically unloaded from the above-mentioned first storage area and/or the above-mentioned second storage area.

In an eleventh aspect of the present invention, a plurality of memories can be connected to the above-mentioned memory interface unit. The above-mentioned memory interface unit can select a memory from among the above-mentioned plurality of memories, and access the selected memory based on an access destination specified by each access portion.

Except in so far as they are conflicting, embodiments of the invention may include any combination of the features of the above aspects.

The respective processes carried out by a storage system according to the present invention can be executed by various means.

### BRIEF DESCRIPTION OF THE DRAWINGS

Fig. 1 shows an overview of one aspect of the present invention;
Fig. 2 shows a block diagram of a storage system related to a first embodiment of the present invention;
Fig. 3 shows a block diagram of a CMA 270;
Fig. 4A shows a block diagram of a main arbiter 30;
Fig. 4B shows an example of a state transition of a sequencer 41;
Fig. 5A shows a first variation of the connection mode between a CMA 270 and respective CHA 110 and respective DKA 120;
Fig. 5B shows a second variation of the connection mode between a CMA 270 and respective CHA 110 and respective DKA 120;
Fig. 6 is a diagram for explaining the updating of a count-full threshold value using an SVP 281;
Fig. 7 shows a block diagram of a CMA 870 in a second embodiment of the present invention;
Fig. 8A shows a block diagram of a communication pattern statistics circuit 70;
Fig. 8B shows a block diagram of a statistics/threshold value table;
Fig. 9A shows an example of the flow of processing capable of being carried out by the MP of a CHA and DKA;
Fig. 9B shows an example of the flow of processing capable of being carried out by the memory controller 82 on a CMA 870;
Fig. 10A shows an example of the flow of processing capable of being carried out by T determination circuit 36T;
Fig. 10B shows an example of the flow of processing carried out by a communication pattern statistics circuit 70;
Fig. 10C shows an example of the flow of processing capable of being carried out by a main arbiter 60;
Fig. 11A shows a first utilization example of a CM 130;
Fig. 11B shows a second utilization example of a CM 130;
Fig. 11C shows a third utilization example of a CM 130;
Fig. 11D shows a fourth utilization example of a CM 130;
Fig. 12 shows block diagrams of a CHA 710 and CMA 470 related to a third embodiment of a first aspect of the present invention;
Fig. 13A shows an example of the connections between either a CHA 510 or DKA 520 and either another CHA 510 or DKA 520 in a fourth embodiment of a first aspect of the present invention;
Fig. 13B is a schematic diagram of one example of a communications protocol of an R path 2 in the first embodiment of the present invention; and
Fig. 14 is a schematic diagram of one example of a communications protocol of a T path 3 in the first embodiment of the present invention.

Embodiments of the present invention will be explained below by referring to the figures.

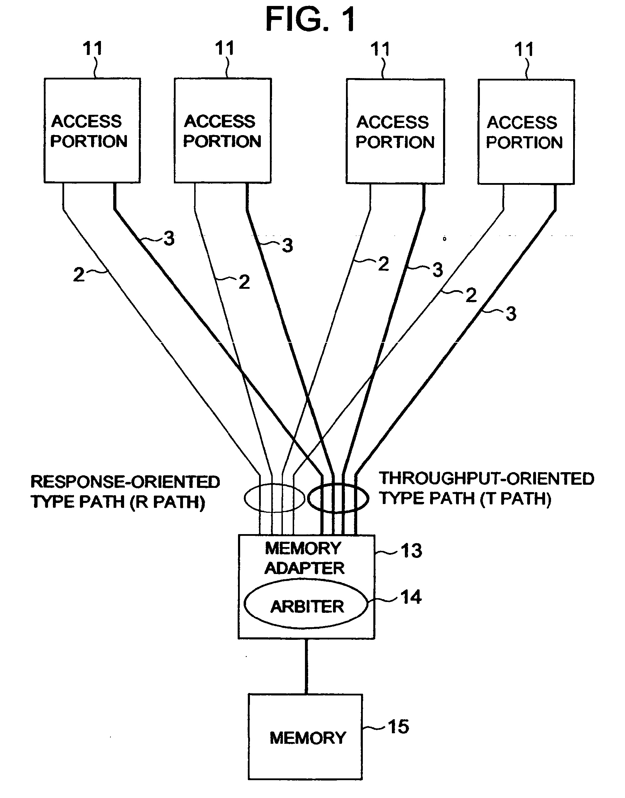

Fig. 1 shows an overview of an aspect of the present invention.

This aspect comprises a memory 15, and a plurality of access portions 11, 11, ... for accessing the memory 15. This aspect further comprises a memory adapter 13, which is between the memory 15 and the respective access portions 11, and which controls access from the plurality of access portions 11, 11, ... to the memory 15.

Each access portion 11, for example, can be a device comprising a processor; an R path 2 interface unit (hereinafter, interface unit will be abbreviated as "I/F"), which will be explained hereinafter; and a hereinafter-explained T path 3 I/F. More specifically, for example, the processor can be an MP, which is mounted in a channel adapter (hereinafter, CHA) and a disk adapter (hereinafter, DKA) to be explained hereinafter. Further, a device, which comprises the R path 2 I/F and T path 3 I/F can be a path I/F, which will be explained hereinafter.

Further, the memory 15, for example, can be either a cache memory (hereinafter, CM) or a local memory (hereinafter, LM), which will be explained hereinafter. When the memory 15 is a CM, this CM can be a memory, which is also capable of being used as a shared memory (hereinafter, SM) such as that explained hereinabove. Thus, the above-mentioned SM becomes unnecessary, making it possible to reduce the cost of the storage system. Furthermore, in this aspect, as a matter of convenience, the need for the SM is eliminated by integrating the SM with the CM, or to put it another way, it is also possible to do away with the need for the CM by integrating the CM with the SM. In other words, two kinds of memory, which are physically separate, can be combined to make one kind of memory.

Various points are worth noting in this aspect.

For example, the first point worth noting is that a response-oriented type path (hereinafter, R path) 2 and a throughput-oriented type path (hereinafter, T path) 3 are provided between each access portion 11 and the memory 15, or at least, between each access portion 11 and the memory adapter 13.

An R path 2 can be characterized as a path for which the length of time, from the sending of information (for example, a command, such as a read command or a write command) until a response thereto has been returned, is short. In other words, an R path 2 can be used as a path suited to the communication of small amounts of information for which a rapid response is required. Hereinbelow, there will be times when, for reasons of expediency, either information or an access exchanged by way of an R path 2 will be referred to as either "R information" or "R access".

A T path 3 can be used as a path capable of exchanging large amounts of information (for example, a path, which, after receiving a one-time data transfer, can exchange data in large amounts by virtue of a burst transfer). In other words, a T path 3 can be used as a path suited to the communication of data, which is written to a disk-type storage device (hereinafter, a disk device) or read from a disk device. A T path 3, for example, is a PCI-Express. Hereinbelow, there will be times when, for reasons of expediency, either information or an access exchanged by way of a T path 3 will be referred to as either "T information" or "T access".

Further, for example, a second point worth noting is that the memory adapter 13 comprises an arbiter 14, which places priority on an access to the memory 15 via an R path 2 (that is, R access) over an access to the memory 15 via a T path 3 (that is, T access). This arbiter 14, for example, can preferentially allow an R access when an R access and a T access are received at substantially the same time. Thereafter, the arbiter 14, for example, can preferentially allow a newly received R access when the new R access is received prior to allowing the above-mentioned received T access. The arbiter 14, for example, counts the number of times that R access has been preferentially allowed, and when this number reaches a predetermined number of times, thereafter, it can allow a T access even when an R access and a T access are received at substantially the same time, and even when a new R access is received prior to a received T access being allowed.

A number of embodiments regarding this aspect will be explained in more detail below.

### First Embodiment

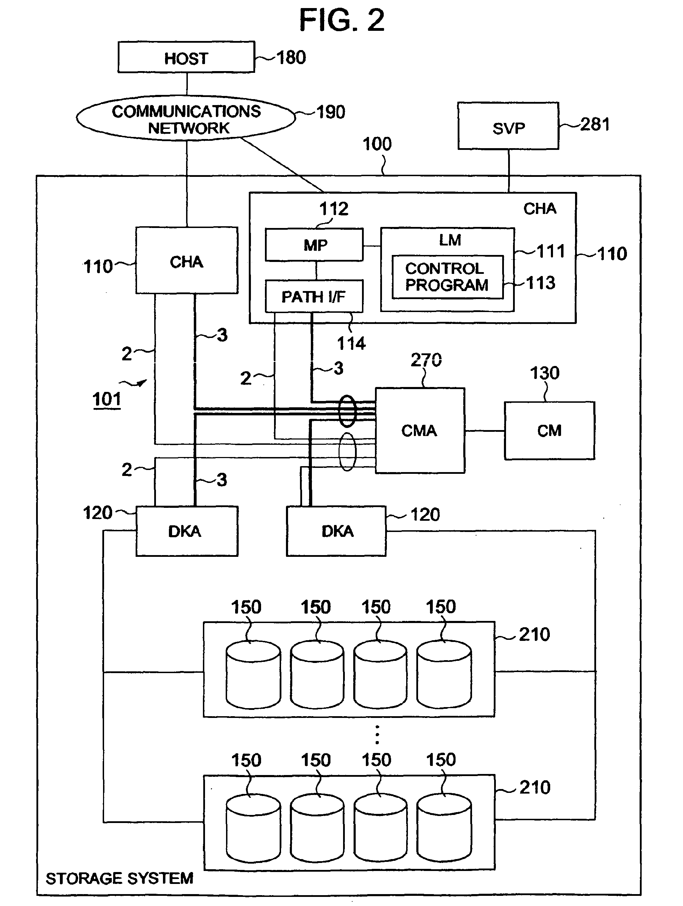

Fig. 2 shows a block diagram of a storage system related to a first embodiment of the present invention.

The storage system 100, for example, is a disk array device such as a RAID (Redundant Array of Independent Disks). The storage system 100, for example, comprises a controller 101 for controlling the processing carried out by the storage system 100; a RAID group 210; and a service processor (SVP) 281. The controller 101, for example, comprises either one or a plurality of DKA 120; one or a plurality of CHA 110; a CM 130; and a CM adapter (hereinafter, CMA) 270.

The RAID group 210 comprises a plurality of disk devices 150, and, for example, provides redundant storage based on RAID, such as RAID1 and RAID5. Each disk device 150, for example, is a hard disk drive, but can also be another type of device (for example, a DVD (Digital Versatile Disk drive). Data, which is read and written in accordance with a command from a host 180, is stored in the respective disk devices 150.

The respective DKA 120 control the exchange of data between the respective disk devices 150. The respective CHA 110 receive information (for example, a command and data) from the host 180 via a communications network (for example, a SAN (Storage Area Network) and a LAN) 190. Since the DKA 120 and CHA 110 can employ substantially the same hardware configuration, the hardware configuration of a CHA 110 will be explained as a typical example.

A CHA 110 comprises an MP 112; LM 111; and path I/F 114. The LM 111 is a memory, which is mounted in a CHA 110 and a DKA 120, and can store a variety of information (for example, data and computer programs). The MP 112, for example, can execute a variety of controls, such as control of access to the CM 130, by reading and executing a control program 113 stored in the LM 111. The path I/F 114 comprises an R path I/F (not shown in figure), which is connected to an R path 2, and a T path I/F (not shown in figure), which is connected to a T path 3. The MP 112 can access the CM 130 by way of the path I/F 114, an R path 2 and T path 3, and the CMA 270. The selection of an R path 2 or a T path 3 via which to carry out access can be done by either of the MP 112 or the path I/F 114. For example, when the information outputted from the path I/F 114 is a command, or data, which is to be written to a disk device 150, and the size of the data is less than a predetermined value, an R path 2 can be selected. Further, for example, when the information outputted from the path I/F 114 is data, which is to be written to a disk device 150, and the size of the data is a predetermined value or more, a T path 3 can be selected.

The CM 130, for example, can be constituted from either a volatile or nonvolatile semiconductor memory. This CM 130 can be used as the above-mentioned SM-integrated memory. That is, in addition to temporarily storing data exchanged between a disk device 150 and the host 180, the CM 130 can also store commands, which are exchanged between the respective MPs 112, and control information, which is used to control the storage system 100 (for example, information related to the configuration of the storage system 100).

The CMA 270 can be an LSI (Large Scale Integration) for controlling access to the CM 130. The CMA 270 is connected to the respective CHA 110 and respective DKA 120 by at least one R path 2, and at least one T path 3.

The SVP (Service Processor) 281, for example, is communicatively connected to at least one CHA 110 (or DKA 120). The SVP 281, for example, is a computer, such as a personal computer. The SVP 281 can carry out a variety of settings relative to at least one CHA 110, and via that CHA 110.

Next, an example of the processing carried out by the storage system 100 will be explained.

For example, it is supposed that a CHA 110 received a write command (hereinafter, host write command) and data from the host 180. In this case, at least one of the MP 112 and path I/F 114 can, in accordance with this host write command, send a write command (hereinafter, MP write command) for the MP of a DKA 120 to the CMA 270 by way of an R path 2. Further, at least one of the MP 112 and path I/F 114 can send received data to the CMA 270 via a T path 3. The CMA 270 can write the MP write command received via the R path 2, and the data received via the T path 3 to the CM 130. The CMA 270 can acquire the MP write command written to the CM 130, and send this MP write command by way of an R path 2 to the DKA 120 in which is mounted the MP of this command destination. Further, the CMA 270 can acquire the data written to the CM 130, and send this data by way of a T path 3 to the DKA 120 in which is mounted this destination MP. The above-mentioned destination MP can receive an MP write command via an R path 2, and can receive data via a T path 3, from the CMA 270. The destination MP can write the received data to a disk device 150 in accordance with the received MP write command. Further, the destination MP returns an MP write command response to the CMA 270 by way of an R path 2. The CMA 270 can write the response received via the R path 2 to the CM 130, or acquire this response from the CM 130, and output it via an R path 2 to the MP write command destination.

Further, for example, it is supposed that a CHA 110 received a read command (hereinafter, host read command) from the host 180. In this case, at least one of the MP 112 and path I/F 114 can, in accordance with this host read command, send a read command (hereinafter, MP read command) for the MP of a DKA 120 to the CMA 270 by way of an R path 2. The CMA 270 can write the MP read command received via the R path 2 to the CM 130. The CMA 270 can acquire the MP read command written to the CM 130, and send this MP read command via the R path 2 to the DKA 120 in which is mounted the MP of this command destination. A response relative to this MP read command can be returned to the MP read command source by way of an R path 2, the CMA 270 and CM 130, the same as the response for the above-mentioned MP write command. The destination MP acquires data from a disk device 150 in accordance with the MP read command, and the acquired data can be sent to the CMA 270 by way of a T path 3. The CMA 270 can either write the received data to the CM 130, or it can acquire this data from the CM 130, and send it by way of a T path 3 to the source of the MP read command. The CHA 110, which is the source of the MP read command, can send the data received by way of a T path 3 to the host 180 of the destination of the host read command.

The preceding is an overview of a storage system 100 in this embodiment. Furthermore, with regard to the respective communication protocols of an R path 2 and a T path 3, the following protocol is considered preferable.

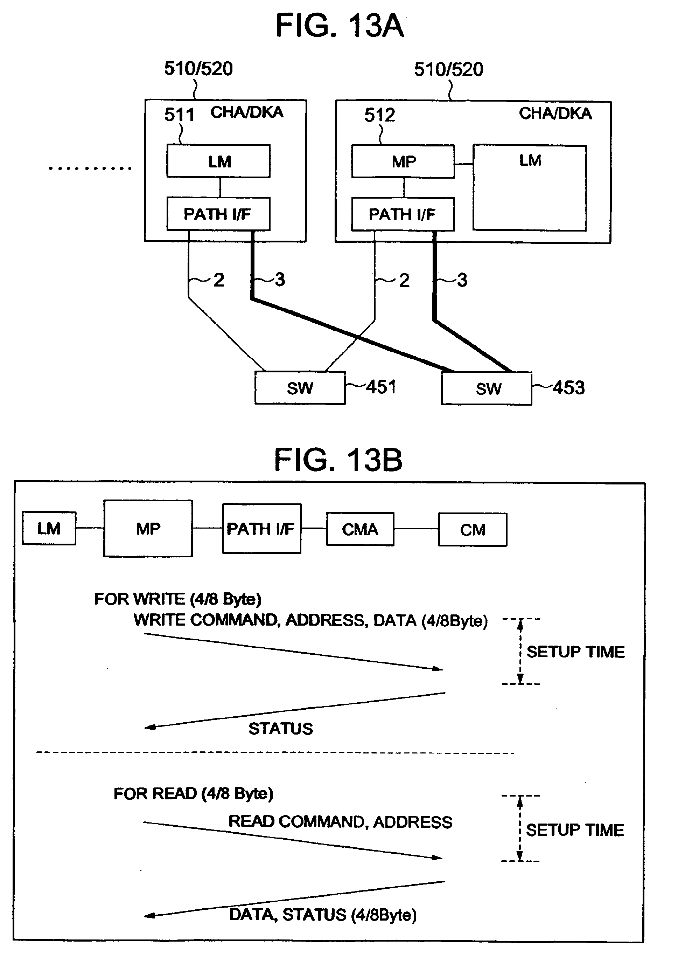

That is, it is desirable that the protocol for communications via an R path 2 have a shorter setup time than at least the setup time of a T path 3. More specifically, for example, it is desirable that the R path 2 communication protocol have small overhead and outstanding single random access. A more specific example is shown in Fig. 13B. That is, with an R path 2, the information transfer length is short (for example, 4 or 8 bytes), and throughput is low, but the MP 112 is designed to be able to access a mapped address on the CM 130 (For example, a CM 130 address map is stored in LM 111, and the MP 112 can access the CM 130 on the basis of this address map.). Consequently, the length of time for setup can be kept short (In other words, it is possible to respond more quickly.).

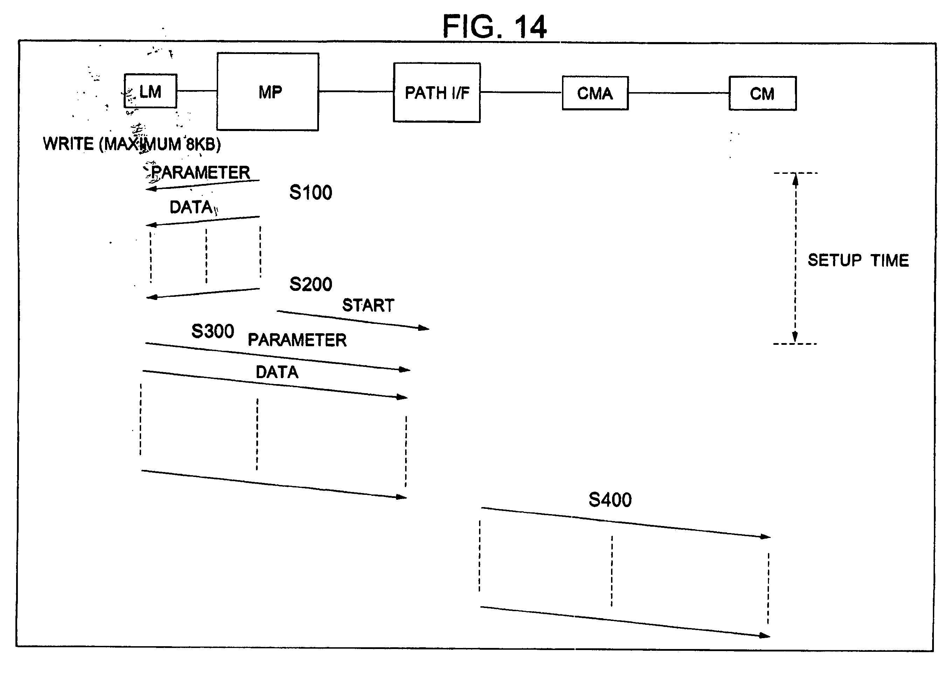

Conversely, it is desirable that the protocol for communications via a T path 3 excel at data transfer even if the length of time for setup is longer than that for an R path 2. More specifically, for example, it is desirable that a T path 3 communication protocol have outstanding burst access even if its overhead is large. A more specific example is shown in Fig. 14. For example, the MP 112 can write the parameter and data to the LM 111 (Step S100), and issue a transfer request to the path I/F 114. The path I/F 114 can respond to this request, read the parameter and data from the LM 111 (S300), and then transfer the data to the CM 130 on the basis of the read parameter (S400). As explained above, because of the need for procedures to set the parameter and data in the LM 111, and to boot up the path I/F, setup takes a long time, but since a burst transfer (for example, a burst transfer of a maximum of 8 kilobytes) can be carried out, throughput is high.

The CMA 270 will be explained in detail below.

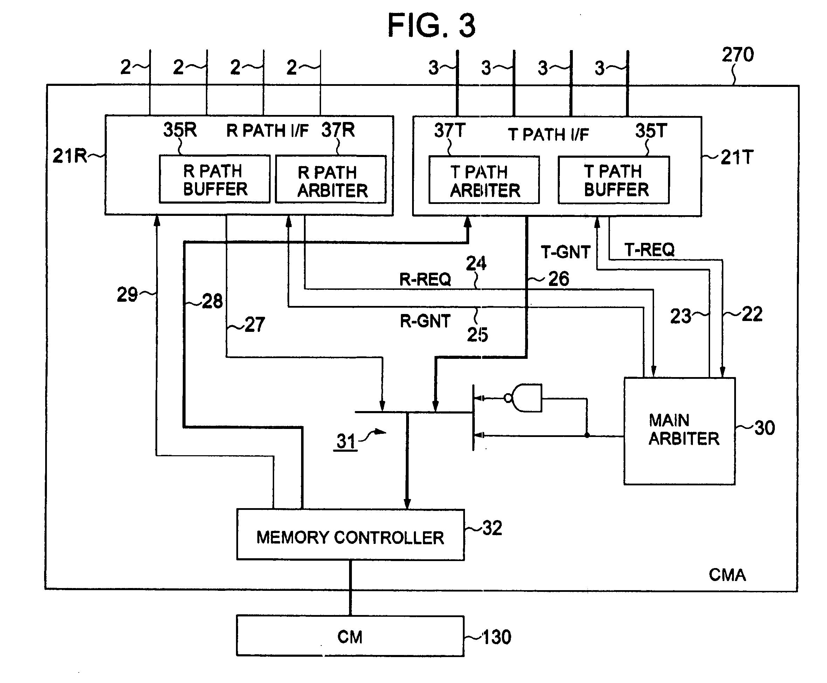

Fig. 3 shows a block diagram of a CMA 270.

A CMA 270 can be a pure hardware circuit (for example, an ASIC), or it can be a combination of a microprocessor and a hardware circuit. The CMA 270 comprises an R path I/F 21R, a T path I/F 21T, a selector 31, a main arbiter 30, and a memory controller 32.

The R path I/F 21R is communicatively connected to the main arbiter 30 via a request line 24 and a response line 25, and is communicatively connected to the memory controller 32 via an R path line 29. Similarly, the T path I/F 21T is communicatively connected to the main arbiter 30 via a request line 22 and a response line 23, and is communicatively connected to the memory controller 32 via a T path line 28. The exchanges made via the respective lines 22, 23, 24, 25, 28 and 29 will be explained during the explanation of the processing carried out by the CMA 270.

The R path I/F 21R is connected to a plurality of R paths 2. The R path I/F 21R comprises an R path buffer 35R and an R path arbiter 37R. The R path buffer 35R is a buffer capable of temporarily storing R information (for example, a command and a response) received via the respective R paths 2, and R information received from the CM 130 via the memory controller 32. The R path arbiter 37R is an arbiter capable of controlling from which R path 2, of a plurality of R paths 2, 2, ..., R information will be received, and written to the R path buffer 35R.

The T path I/F 21T is connected to a plurality of T paths 3. The T path I/F 21T comprises a T path buffer 35T and a T path arbiter 37T. The T path buffer 35T is a buffer capable of temporarily storing information received via the respective T paths 3 (that is, T information), and T information received from the CM 130 via the memory controller 32. The T path arbiter 37T is an arbiter capable of controlling from which T path 3, of a plurality of T paths 3, 3, ..., T information will be received, and written to the T path buffer 35T.

The selector 31 can, in accordance with a signal inputted from the main arbiter 30, select which information, R information or T information, will be outputted to the memory controller 32.

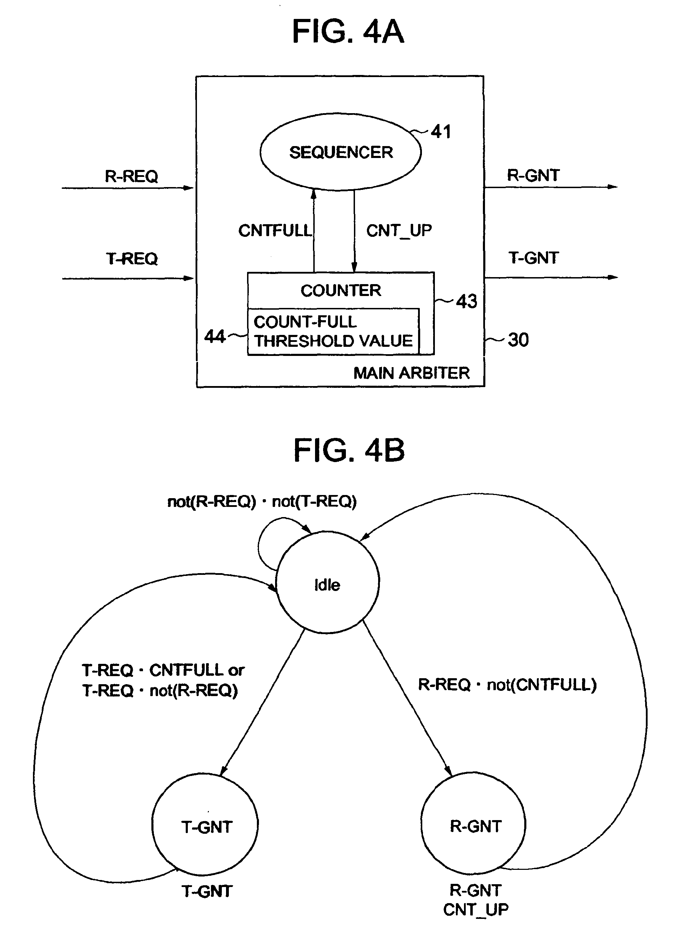

The main arbiter 30 can select which access to allow, an R access or a T access (for example, which information, R information or T information, will be allowed to be outputted to the memory controller 32), and can output a signal corresponding to the results of this selection to the selector 31. More specifically, for example, the main arbiter 30, for example, comprises a sequencer 41, and a counter 43, as shown in Fig. 4A. The counter 43 comprises a register 44. A count-full threshold value, which will be explained hereinafter, is stored in the register 44. The processing carried out by the sequencer 41 and counter 43 will be explained during the explanation of the processing performed by the CMA 270.

The memory controller 32 can receive information selected by the selector 31 and write it to the CM 130, and can acquire information from the CM 130, and output the acquired information via either the R path line 29 or the T path line 28.

An example of the flow of processing carried out by the CMA 270 will be explained hereinbelow.

For example, when the T path I/F 21T receives T information from one or more T paths 3, the T path arbiter 37T selects the T path 3 from which T information will be received, receives the T information from the selected T path 3, and writes it to the T path buffer 35T. If T information is being stored in the T path buffer 35T, the T path I/F 21T issues a request for T access permission (hereinafter, T-REQ) to the main arbiter 30 via the request line 22. The T path I/F 21T continues to issue the T-REQ (for example, leaves the signal level for the request line 22 set at the High level) until it receives, via the response line 23, T access granted (hereinafter, T-GNT) in relation to this T-REQ. Conversely, when the T path I/F 21T receives T-GNT, it cancels the T-REQ (For example, it converts the signal level for the request line 22 from High level to Low level.), and outputs the T information inside the T path buffer 35T (for example, the information inside the T path buffer 35T that was received the longest time ago) to the selector 31 via a line 26. The T path I/F 21T repeats the issuing of a T-REQ, the receiving of a T-GNT, and the outputting of T information for each T information that exists in the T path buffer 35T.

The R path I/F 21R can also carry out the same processing as the T path I/F 21T. That is, for example, when the R path I/F 21R receives R information from one or more R paths 2, the R path arbiter 37R selects the R path 2 from which R information will be received, receives the R information from the selected R path 2, and writes it to the R path buffer 35R. If R information is being stored in the R path buffer 35R, the R path I/F 21R issues a request for R access permission (hereinafter, R-REQ) to the main arbiter 30 via the request line 24. The R path I/F 21R continues to issue the R-REQ until it receives, via the response line 25, R access granted (hereinafter, R-GNT) in relation to this R-REQ. Conversely, when the R path I/F 21R receives R-GNT, it cancels the R-REQ, and outputs the R information inside the R path buffer 35R to the selector 31 via the line 26. The R path I/F 21R repeats the issuing of a R-REQ, the receiving of a R-GNT, and the outputting of R information for each R information that exists in the R path buffer 35R.

The sequencer 41 of the main arbiter 30, as shown in the example of Fig. 4B, constitutes an idol state (waiting state) when neither an R-REQ nor a T-REQ has been received.

When an R-REQ is received in the idol state, the sequencer 41 transitions to the R-GNT state if the count is not full (if the count value according to the counter 43 has not reached the count-full threshold value in the register 44), outputs R-GNT, outputs a signal corresponding to the granting of R access to the selector 31, and instructs the counter 43 to perform count up. The counter 43 responds to this command, and updates the count value (for example, increases the count by 1). Thereafter, the state of the sequencer 41 transitions once again from the R-GNT state to the idol state. The sequencer 41 can transition to the R-GNT state when it receives an R-REQ within a predetermined time of receiving a previous R-REQ.

When a T-REQ is received in the idol state, if the count is not full (if the count value according to the counter 43 has not reached the count-full threshold value in the register 44), or if an R-REQ has not been received within a predetermined time period, the sequencer 41 transitions to the T-GNT state, outputs T-GNT, and outputs a signal corresponding to the granting of T access to the selector 31. When the count is full, and the sequencer 41 transitions to the T-GNT state, it can reset the count value on the counter 43. Thereafter, the state of the sequencer 41 transitions once again from the T-GNT state to the idol state.

Fig. 3 will be referenced once again. When the T path I/F 21T receives a T-GNT, it can output T information inside the T path buffer 35T to the selector 31. Similarly, when the R path I/F 21R receives R-GNT, it can output R information inside the R path buffer 35R to the selector 31.

The selector 31 can output T information received from the T path I/F 21T, and R information received from the R path I/F 21R to the memory controller 32 in accordance with a signal received from the main arbiter 30.

The memory controller 32 can receive either R information or T information, and write the received information to the CM 130. Further, if the received R information or T information represents a read request from the CM 130, the memory controller 32 can acquire information from the CM 130 in accordance with this request, and either output the acquired information to the R path I/F 21R via the R path line 29, or output the acquired information to the T path I/F 21T via the T path line 28.

The preceding is an explanation of the first embodiment.

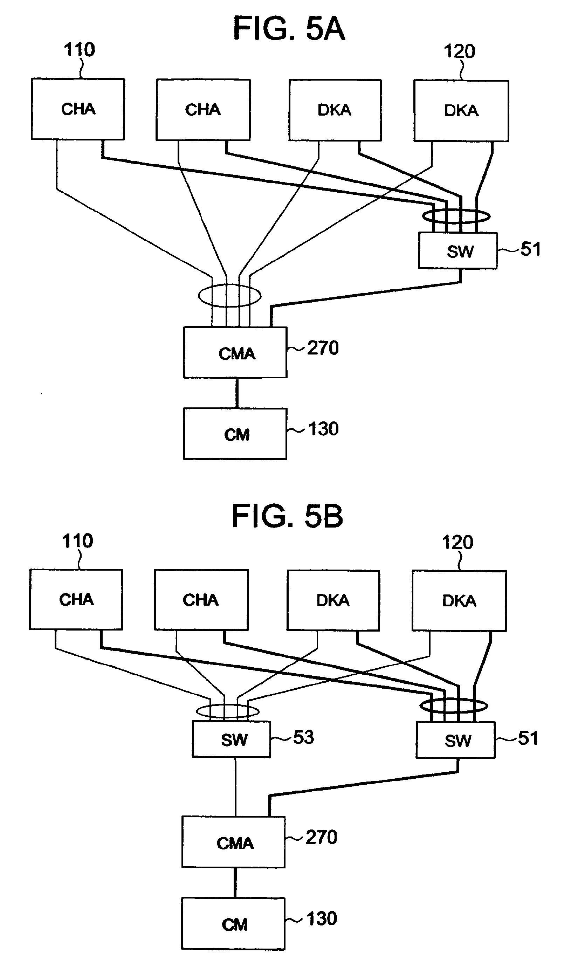

Furthermore, in this first embodiment, an R path 2 and a T path extend directly between each CHA 110 and each DKA 120, and the CMA 270, but the connection mode is not limited to this. For example, as illustrated in Fig. 5A, there is no switch on the R path 2, which places emphasis on response speed, but a switch (for example, an LSI) 51 can exist on the respective T paths 3. Further, for example, as illustrated in Fig 5B, a switch 53 can also exist on an R path 2. When this is the case, from the standpoint of stressing response speed, it is considered desirable that the number of switches on an R path 2 be less than the number of switches on a T path 3.

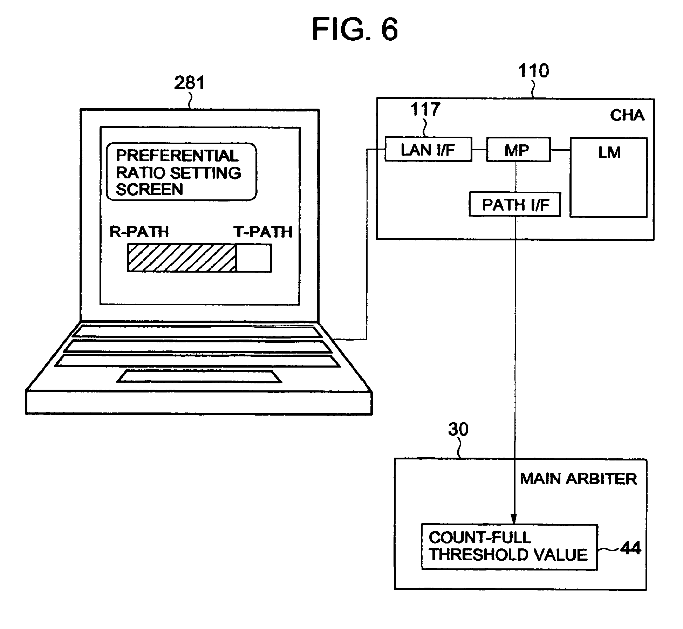

Further, in this first embodiment, the count-full threshold value can be a fixed value, but it can also be a value, which can be manually updated. More specifically, for example, as illustrated in Fig. 6, a user can input a desired count-full threshold value (for example, the preferred ratio of R accesses) to the SVP 281. The SVP 281 can input the inputted count-full threshold value to a CHA 110 via a prescribed I/F (for example, the LAN I/F 117). The CHA 110 can update the count-full threshold value by instructing the CMA 270 to write the inputted count-full threshold value to the register 44.

According to the first embodiment described hereinabove, an R path 2 and a T path 3 extend between each CHA 110 and each DKA 120, and the CM 130. The respective CHA 110 and respective DKA 120 can send and receive via an R path 2 the kinds of information for which speed of response is emphasized, such as commands and responses, and conversely, can send and receive via a T path 3 the kinds of information for which throughput is emphasized, such as data. Thus, it is possible to do away with the need for an SM, and to reduce costs, while holding in check a drop in storage system 100 throughput.

Further, according to the first embodiment described hereinabove, the sequencer 41 of the main arbiter 30 can preferentially allow more R accesses than T accesses. That is, even if a T-REQ is received first, if an R-REQ is received within a predetermined time thereafter, and the count is not full, the sequencer 41 can output an R-GNT prior to a T-GNT. Further, if an R-REQ is received within a predetermined time after outputting the R-GNT, the sequencer 41 can output an R-GNT instead of a T-GNT so long as the count is not full. However, if a T-REQ is received when the count is full, the sequencer 41 outputs a T-GNT even if a R-REQ is received within the predetermined period of time thereafter. The performance of the storage system 100 can be controlled by the value to which the count-full threshold value is set. For example, in this first embodiment, if the count-full threshold value is set to "10", R accesses will be allowed ten times on a preferential basis before one T access is allowed.

### Second Embodiment

A second embodiment of one aspect of the present invention will be explained below. Furthermore, mainly the points of difference with the first embodiment will be explained below, and explanations of the points in common with the first embodiment will be brief or will be omitted.

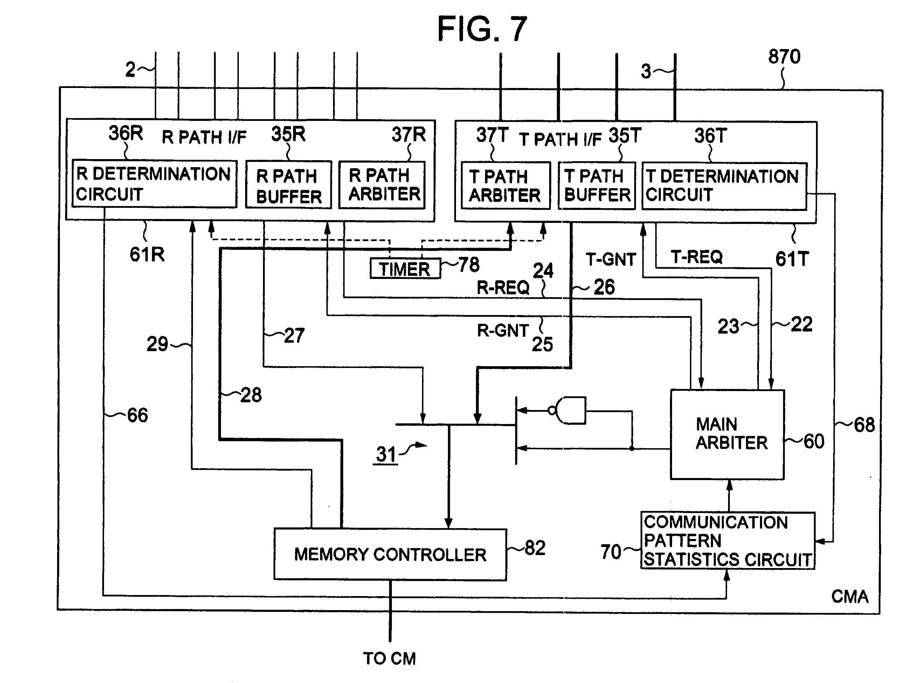

Fig. 7 shows a block diagram of a CMA 870 in a second embodiment of the present invention.

In this second embodiment, the number of R paths 2 exceeds the number of T paths 3.

Further, for example, the R path arbiter 37R and T path arbiter 37T can, based on a time inputted from a timer 78, set the time at which information will be written to either buffer 35R or buffer 35T, in either buffer 35R or buffer 35T in correspondence with that information.

The R path I/F 61R comprises an R determination circuit 36R, and the T path I/F 61T comprises a T determination circuit 36T. The R determination circuit 36R can determine the pattern of R information written to the R path buffer 35R, and the time thereof (for example, the time corresponding to this R information), and can execute processing corresponding to the determination results. Similarly, the T determination circuit 36T can determine the pattern of T information written to the T path buffer 35T, and the time thereof, and can execute processing corresponding to the determination results. The R determination circuit 36R and the T determination circuit 36T can be achieved using pure hardware circuits.

Further, the CMA 870 comprises a communication pattern statistics circuit 60. The communication pattern statistics circuit 60 is a circuit that is used for determining the statistics of communication patterns via the CMA 870, and, for example, can be used as a group of counters. Communication pattern statistics, for example, can indicate what kind and what size of information is being exchanged at what ratio, and at what frequency this information is being exchanged. As kinds of information, for example, there can be types of commands, such as a read command and a write command. As for the frequency, this can be the number of times information is exchanged per unit of time.

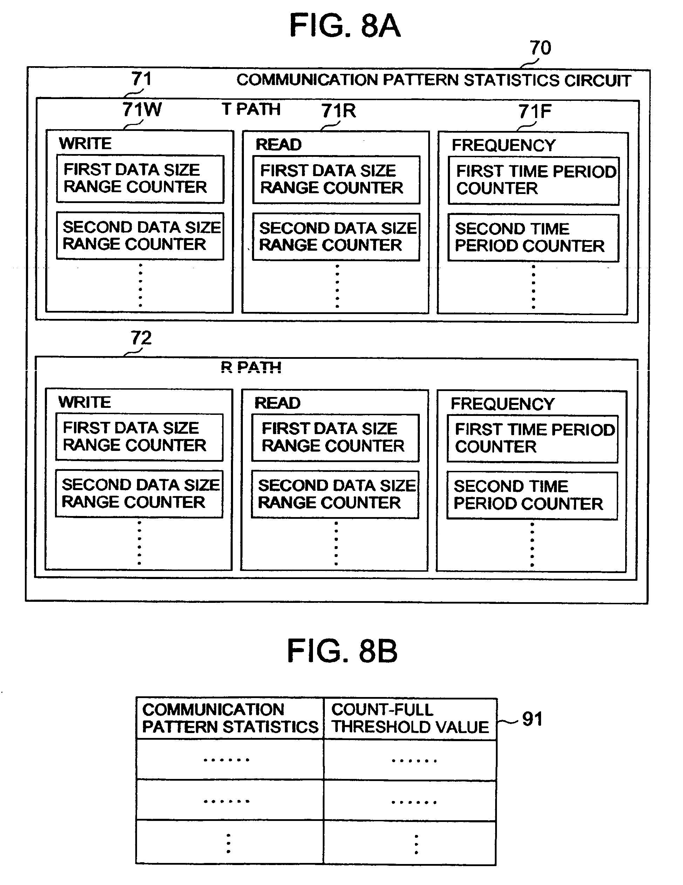

Fig. 8A shows a block diagram of a communication pattern statistics circuit 70.

There is a T path counter group 71 and an R path counter group 72 in the communication pattern statistics circuit 70. Since the respective counter groups 71, 72 have similar constitutions, the T path counter group 71 will be explained as a typical example. The T path counter group 71 has a write sub-counter group 71W, a read sub-counter group 71R, and a frequency sub-counter group 71F. The write sub-counter group 71W and read sub-counter group 71R are constituted from a plurality of counters corresponding to a plurality of types of information size ranges, respectively. The frequency sub-counter group 71F is constituted from a plurality of counters corresponding respectively to a plurality of time periods (for example, a plurality of time periods in 24 hours). How count values are updated in accordance with each counter will be explained during the explanation of an example of the processing carried out by the CMA 870.

A variety of communication pattern statistics can be determined from the respective count values of the respective counters of this communication pattern statistics circuit 70. For example, if all of the count values in the write sub-counter group 71W of the T path counter group 71 are referenced, it is possible to determine statistics of information sizes written to the CM 130. Further, for example, if all of the count values of the T path sub-counter group 71 and all the count values of the R path sub-counter group 72 are compared, it is also possible to determine the ratio of write commands and read commands received.

Furthermore, examples of the configuration of the communication pattern statistics circuit 70 are not limited to this. For example, a frequency sub-counter group can be provided in the write sub-counter group and the read sub-counter group, respectively. In this case, write frequency and read frequency can be determined separately.

In this second embodiment, in addition to the counter-full threshold value, a statistics/threshold table is also stored in the counter register inside the main arbiter 60.

Fig. 8B shows a block diagram of a statistics/threshold table.

A plurality of counter-full threshold values corresponding respectively to a plurality of communication pattern statistics is stored in the statistics/threshold table 91. Communication pattern statistics are statistics on communication patterns determined on the basis of a plurality of count values by the above-mentioned plurality of counters (for example, the respective ratios of number of write commands and read commands received, and frequency of receptions).

Various processing carried out in this second embodiment will be explained below.

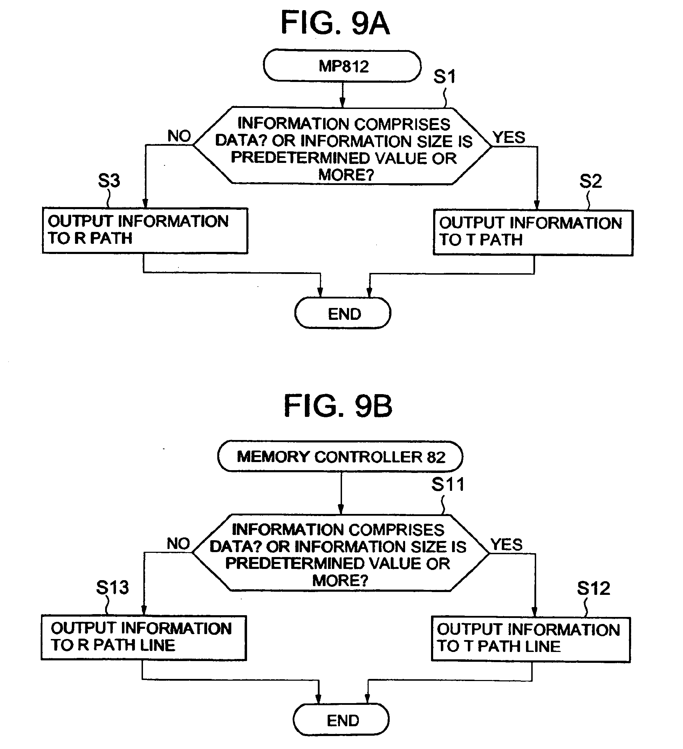

Fig. 9A shows an example of the flow of processing capable of being performed by the MP of a CHA and DKA.

When information is outputted, the MP 812 determines whether or not the output-targeted information comprises data (for example, data to be written from the host 180 to a disk device 150), and whether or not the size of this information is a predetermined value or more (Step S1).

When the results of the determination of S1 indicate that the information comprises data, and that the size of the information is a predetermined value or more, the MP 812 can output the information via a T path 3 (S2). Conversely, when the results of the determinations of S1 indicate that the information does not comprise data, and that the size of the information is less than a predetermined value, the MP 812 can output the information via an R path 2 (S3).

As described above, in this second embodiment, when information is outputted, the MP 812 can make a determination as to whether it is desirable to output this information via an R path 2 or a T path 3, and can output this information by way of the path, which it determines to be desirable. Doing so can be expected to improve the performance of the storage system 100. That is, for example, when a read command and write command are issued, the MP 812 does not have to indiscriminately output this command via a T path 3, instead, in the case of a data-containing write command from the host 180, it can use a T path 3, and when it is a read command, which does not contain such data, it can use an R path 2.

Fig. 9B shows an example of the flow of processing carried out by the CMA 870 memory controller 82.

When information acquired from the CM 130 is outputted to either an R path I/F 61R or a T path I/F 61T, the memory controller 82 makes a determination as to whether or not the output-targeted information comprises data (for example, data read from a disk device 150), and whether or not the size of this information is a predetermined value or more (S11).

When the results of the determinations of S11 indicate that the information comprises data, and the size of the information is a predetermined value or more, the memory controller 82 can output the information to a T path line 28 (S12). Conversely, when the results of the determinations of S11 indicate that the information does not comprise data, and the size of the information is less than a predetermined value, the memory controller 82 can output the information to an R path line 29 (S13).

As described above, in this second embodiment, when information is outputted, the memory controller 82 can make a determination as to whether it is desirable to output this information to an R path line 29 or a T path line 28, and can output this information by way of the path, which it determines to be desirable. Doing so can be expected to improve the performance of the storage system 100.

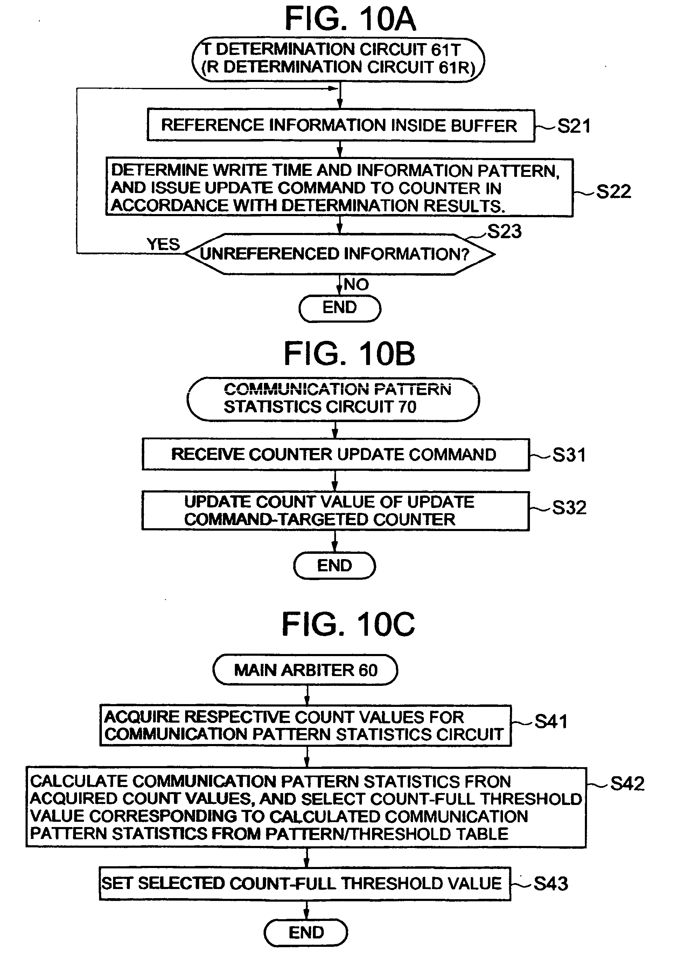

Fig. 10A shows an example of the flow of processing, which can be carried out by a T determination circuit 36T (Furthermore, an R determination circuit 36R is also capable of executing the flow of processing shown in Fig. 10A.) Fig. 10B shows an example of the flow of processing carried out by the communication pattern statistic circuit 70.

The T determination circuit 36T references information inside the T path buffer 35T (S21). Then, the T determination circuit 36T determines the pattern of the referenced information (for example, if it is a write command or a read command, or the size of the information), and the time at which the referenced information was written, and, via a line 68, instructs the communication pattern statistics circuit 70 counters, which correspond to the determination results, to update the counter values (S22). The count values of the counters corresponding to these determination results are thereby updated (S31 and S32). More specifically, for example, in the T path counter group 71, the count value of the counter corresponding to the range of the determined information size in either the write or read sub-counter group 72 or 73, and the count value of the counter corresponding to the time period of the determined time in the frequency sub-counter group 74 are respectively updated.

The T determination circuit 36T can repeat the processing of S21 and S22 so long as unreferenced information exists in the T path buffer 35T (S23: YES).

Fig. 10C shows an example of the flow of processing capable of being carried out by the main arbiter 60.

The main arbiter 60 acquires respective count values from the communication pattern statistics circuit 70 (S41). Also, this S41, for example, can be executed when a prescribed command is received from either the host 180 or the SVP 281, and it can be executed at either regular or irregular intervals.

The main arbiter 60 calculates communication pattern statistics on the basis of the acquired count values, and selects the count-full threshold value, which corresponds to the calculated communication pattern statistic from the statistics/threshold table 91 (S42). Then, the main arbiter 60 sets the selected count-full threshold value in the counter register in the main arbiter 60 as the current count-full threshold value (S43).

According to the above-mentioned second embodiment, communication pattern statistics are calculated arbitrarily, and the count-full threshold value is automatically updated to a count-full threshold value corresponding to this communication pattern. This can be expected to improve the performance of the storage system 100 because, when the communication pattern statistics change, the setting value of the count-full threshold value automatically changes to a count-full value corresponding thereto.

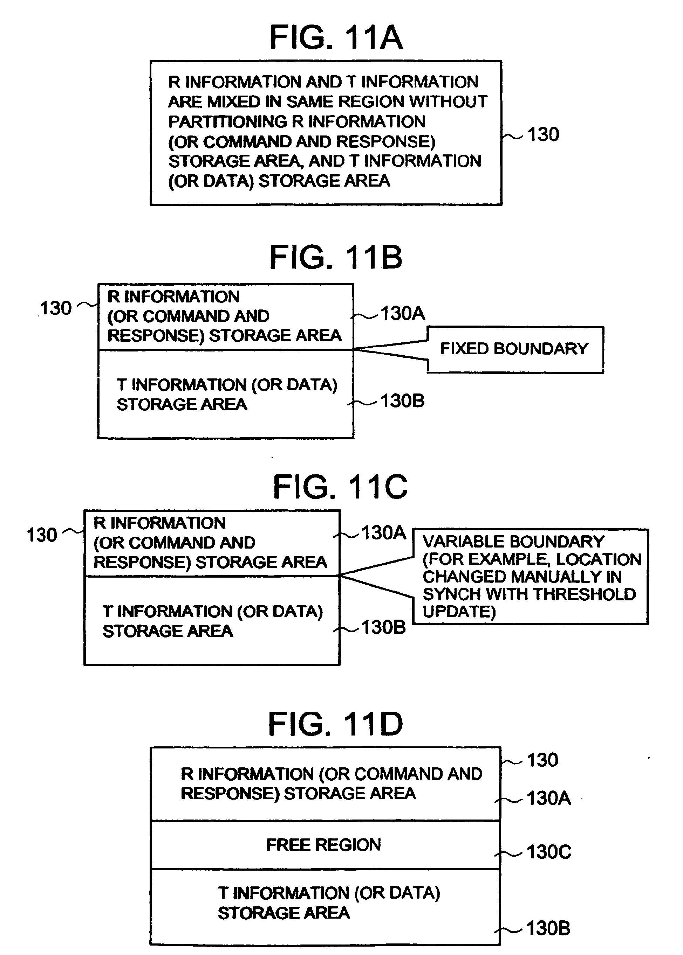

The preceding is an explanation of the second embodiment. Furthermore, in this second embodiment (and/or other embodiments), the CM 130 can be utilized as follows. That is, as described in Fig. 11A, R information (or a command and response) and T information (or data) can be mixed in the same region. Further, for example, as described in Fig. 11B, the R information (or command and response) storage area 130A and the T information (for example, data) storage area 130B are partitioned, and the boundary of these storage areas 130A, 130B can be fixed. Further, for example, as described in Fig. 11C, this boundary can also be variable (for example, can dynamically change to the location corresponding to a post-update count-full threshold value). Further, for example, as shown in Fig. 11D, in addition to the R information (or command and response) storage area 130A and the T information (for example, data) storage area 130B, a free storage area 130C, which does not belong to either one, can also be provided. In this case, the free storage area 130C can be dynamically allocated to the storage areas 130A, 130B and released from the storage areas 130A, 130B as a so-called pool area in accordance with the availability of the storage areas 130A, 130B.

### Third Embodiment

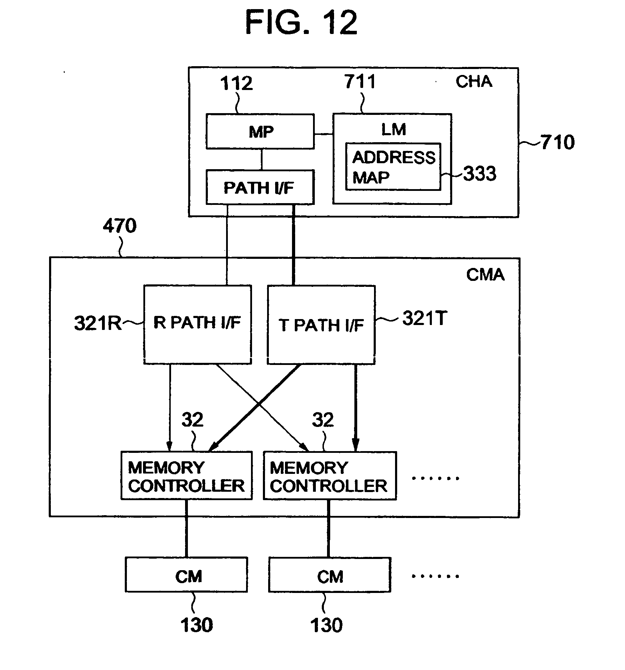

Fig. 12 shows a block diagram of a CHA 710 and a CMA 470 related to a third embodiment of one aspect of the present invention.

A plurality of CMs 130, 130, ... are connected to the CMA 470. In line with this, the CMA 470 comprises a plurality of memory controllers 32, 32, ... respectively corresponding to the plurality of CMs 130, 130, .... An R path I/F 321R and a T path I/F 321T store a not-shown table indicating which memory controller 32 should be accessed in order to access which CM 130.

An address map 333 is stored in the LM 711 of the CHA 710. The address map 333 registers each CM 130, and each CM 130 address. The MP 112 can access a desired address of a desired CM 130 by referencing this address map 333. More specifically, for example, the MP 112 sends the specification of a desired CM 130 and address to the R path I/F 321R and T path I/F 321T together with information. In this case, the R path I/F 321R and T path I/F 321T specify the memory controller 32 corresponding to the specified CM 130, and output the received information to the specified memory controller 32.

As described above, it is also possible to achieve a storage system mounted with a plurality of CMs 130, 130, .... Furthermore, the access method from the MP 112 to the CM 130 is not limited to the above example, and other methods can also be used. More specifically, for example, either the R path I/F 321R or T path I/F 321T can receive a specification for a memory address alone without receiving a specification for a CM 130. In this case, either the R path I/F 321R or T path I/F 321T can specify, from this memory address, a destination CM 130 and its address, and output information to the memory controller 32 corresponding to the specified destination CM 130. Fourth Embodiment

Fig. 13A shows an example of the connections between the respective either CHA 510 or DKA 520 and other either CHA 510 or DKA 520 in a fourth embodiment of one aspect of the present invention.

As shown in this figure, the respective either CHA 510 or DKA 520 and other either CHA 510 or DKA 520 can be connected by an R path 2 and a T path 3. At this time, the respective either CHA 510 or DKA 520 and other either CHA 510 or DKA 520 can respectively be connected via switches 451, 453, and can also be connected via a switch in at least one of an R path 2 and a T path 3.

In this fourth embodiment, when the LM 511 of another either CHA 510 or DKA 520 is accessed, the MP 512 can select, in accordance with the information to be sent, whether this information should be outputted via an R path 2 or a T path 3, and can output this information to the selected path. For example, similar to the second embodiment, when this information comprises data, and when the size of this information is a predetermined value or more, the MP 512 can output the information to a T path 3, and conversely, when this information does not comprise data, and when the size of this information is less than a predetermined value, the MP 512 can output the information to an R path 2.

In accordance with this fourth embodiment, performance when an MP 512 accesses the LM 511 of other either CHA 510 or DKA 520 can be expected to improve.

The preferred aspect and a number of embodiments of the present invention have been explained above.

In addition, for example, information elements indicating the transmission source and destination can be included in information received by the R path I/F and T path I/F in at least one embodiment. In this case, the R path I/F and T path I/F can make a determination based on this information element as to the R path 2 or T path 3 from which information should be outputted.

Further, the count-full threshold value can also be set for each prescribed unit. For example, a user ID, a logical volume ID set on a digital device 150, and the like can be used as prescribed units. In this case, for example, the CMA 270 can execute the granting of preferential R access in accordance with a count-full threshold value corresponding to the user ID of the information transmission source, and the logical volume ID of the information transmission destination.

Further, in the second embodiment, instead of a method, which references a statistics/threshold value table 91, the main arbiter 60 can use a prescribed algorithm to compute and determine a count-full threshold value corresponding to calculated communication pattern statistics.

Further, the count-full threshold value can also be updated from the host 180.

Also, for example, the respective MPs 112 can distribute an access destination for a CM 130 on the basis of an address map stored in the LM 111. More specifically, for example, when sending T information, an MP 112 can send the T information by specifying an address in a first address range, and conversely, when sending R information, an MP 112 can send the R information by specifying an address in a second address range, which differs from the first address range.

## Claims

1. A storage system (100), comprising:
a memory (15, 130);
a plurality of access portions (11, 110, 120, 710, 510, 520) for accessing said memory; and
a memory interface unit (13, 270, 870, 470) for controlling access to said memory from said plurality of access portions;
wherein the storage system further comprises :
a plurality of types of paths communicatively connecting the respective access portions and said memory interface unit,
wherein said plurality of types of paths comprise a response-type path (2) and a throughput-type path (3),
said response-type path is a path via which the amount of information capable of being transferred within the same period of time is less than that of said throughput-type path, but the length of time from when information is sent until a response thereto is received is shorter than that of said throughput-type path;
said throughput-type path is a path via which the length of time from when information is sent until a response thereto is received is longer than that of said response-type path, but the amount of information that is capable of being transferred within the same period of time is greater than that of said response-type path; and
said memory interface unit comprises an arbiter (14) which places a priority on an access to said memory via said response-type path over an access to said memory via said throughput-type path, thereby preferentially allowing access to said memory via said response-type path over access to said memory via said throughput-type path.

2. The storage system (100) according to Claim 1, wherein said memory interface unit (13, 270, 870, 470) preferentially allows access via said response-type path (2) at a prescribed ratio.

3. The storage system (100) according to Claim 2, wherein whenever the number of times that preferential access is allowed via said response-type path (2) reaches a predetermined number (44), said memory interface unit (13, 270, 870, 470) allows access via said throughput-type path (3) without preferentially allowing access via said response-type path.

4. The storage system (100) according to Claim 2 or Claim 3, wherein said memory interface unit (13, 270, 870, 470) calculates statistics of a communication pattern via at least one of said response-type path (2) and said throughput-type path (3), determines a ratio corresponding to the calculated statistics, and takes said determined ratio as said prescribed ratio.

5. The storage system (100) according to Claim 4, wherein, when said memory interface unit (13, 270, 870, 470) receives information via at least one of said response-type path (2) and said throughput-type path (3), said memory interface unit determines at least one of said received information type, size, or reception time, and in accordance with the results of that determination, updates at least one of the number of times each type of information is received, the number of times each size range of information is received, and the frequency at which the information is received, and calculates said statistics based on at least one of the number of times each type of information is received, the number of times each size range of information is received, and the frequency at which the information is received.

6. The storage system (100) according to any one of Claims 1 to 5, wherein between said plurality of access portions (11, 110, 120, 710, 510, 520) and said memory interface unit (13, 270, 870, 470), there is no switch on said response-type path (2), or the number of switches (53, 451) on said response-type path is less than the number of switches (51, 453) on said throughput-type path (3).

7. The storage system (100) according to any one of Claims 1 to 6, wherein the number of said response-type paths (2) is larger than the number of said throughput-type paths (3).

8. The storage system (100) according to any one of Claims 1 to 7, wherein said storage system is communicatively connected to an external device (180, 281), which is a device that exists externally thereto, wherein:
said memory is a cache memory (130);
said memory interface unit is a cache memory adapter (270, 870, 470), which controls access to said cache memory;
the storage system further comprising:
a disk-type storage device (150);
a channel adapter (110, 710, 510), which is communicatively connected to said external device; and
a disk adapter (120, 520), which is communicatively connected to said disk-type storage device,
wherein said channel adapter and said disk adapter write either a command or a response for another channel adapter or disk adapter to said cache memory by sending the command or response to said cache memory adapter via said response-type path (2), and/or receive from said cache memory adapter via said response-type path either a command or a response which is written to said cache memory and addressed to said channel adapter or disk adapter itself;
said channel adapter and said disk adapter write said data to said cache memory by sending the data to said cache memory adapter via said throughput-type path (3), and/or receive said data, which is written to said cache memory, from said cache memory adapter via said response-type path;
each of said plurality of access portions is either said channel adapter or said disk adapter.

9. The storage system (100) according to any one of Claims 1 to 7, wherein said storage system is communicatively connected to an external device (180, 281), which is a device that exists externally thereto, and comprises:
a cache memory (130);
a disk-type storage device (150);
a channel adapter (510), which can receive data from said external device and write the data to said cache memory, and/or can acquire data from said cache memory, and send the data to said external device; and
a disk adapter (520), which can acquire data written to said cache memory, and write the data to said disk-type storage device, and/or can acquire data from said disk-type storage device, and write the data to said cache memory,
wherein said channel adapter and said disk adapter comprise a microprocessor (512), a local memory (511), and a path interface unit connected to said plurality of types of paths;
each of said plurality of access portions is said microprocessor;
said memory is said local memory, which is mounted in either another channel adapter or disk adapter, for said microprocessor; and
said memory interface unit is said path interface unit, which is mounted in either another channel adapter or disk adapter, for said microprocessor.

10. The storage system (100) according to any one of Claims 1 to 9, wherein said storage system comprises a disk-type storage device (150), and
each of said plurality of access portions (11, 110, 120, 710, 510, 520) makes a determination as to whether or not information comprises data to be written to said disk-type storage device, and/or makes a determination as to whether or not the size of said information is a predetermined value or more, and
when the results of said determinations indicate that the information comprises data to be written to said disk-type storage device, and/or that the size of said information is the predetermined value or more, each of said plurality of access portions sends said information to said memory interface unit (13, 270, 870, 470) via said throughput-type path (3), and
when the results of said determinations indicate that the information does not comprise data to be written to said disk-type storage device, and/or that the size of said information is less than the predetermined value, each of said plurality of access portions sends said information to said memory interface unit via said response-type path (2).

11. The storage system (100) according to any one of Claims 1 to 9, wherein said storage system comprises a disk-type storage device (150),
said memory interface unit (13, 270, 870, 470) makes a determination as to whether or not information comprises data, which is stored in said disk-type storage device, and/or makes a determination as to whether or not the size of said information is a predetermined value or more, and
when the results of said determinations indicate that the information comprises data stored in said disk-type storage device, and/or that the size of said information is the predetermined value or more, said memory interface unit sends said information to at least one access portion (11, 110, 120, 710, 510, 520) via said throughput-type path (3), and
when the results of said determinations indicate that the information does not comprise data stored in said disk-type storage device, and/or that the size of said information is less than the predetermined value, said memory interface unit sends said information to at least one access portion via said response-type path (2).

12. The storage system (100) according to any one of Claims 1 to 11, wherein information received via said response-type path (2), and information received via said throughput-type path (3) are mixed in the same region of said memory (15, 130), or either a command or a response, and data to be stored in a disk-type storage device (150) are mixed in the same region of said memory.

13. The storage system (100) according to any one of Claims 1 to 12, wherein a first storage area and a second storage area are provided in said memory (15, 130),
information received via said response-type path (2), or either a command or a response is stored in said first storage area,
information received via said throughput-type path (3), or data to be stored in a disk-type storage device (150) is stored in said second storage area, and
the respective sizes of said first storage area and said second storage area are either fixed or variable.

14. The storage system (100) according to Claim 4 or any Claim dependent on Claim 4, wherein a first storage area and a second storage area are provided in said memory (15, 130),
information received via said response-type path (2), or either a command or a response is stored in said first storage area,
information received via said throughput-type path (3), or data to be stored in a disk-type storage device (150) is stored in said second storage area, and
the sizes of said first storage area and said second storage area dynamically change in size in accordance with said determined ratio.

15. The storage system according to any one of Claims 1 to 12, wherein a first storage area, a second storage area, and a third storage area are provided in said memory (15, 130),
information received via said response-type path (2), or either a command or a response is stored in said first storage area,
information received via said throughput-type path (3), or data to be stored in a disk-type storage device (150) is stored in said second storage area, and
either all or a part of said third storage area is dynamically allocated to said first storage area and/or said second storage area, or, either all or a part of said third storage area is dynamically released from said first storage area and/or said second storage area.

16. The storage system (100) according to any one of Claims 1 to 15, wherein a plurality of memories (15, 130) are connected to said memory interface unit (13, 270, 870, 470), and
said memory interface unit selects a memory from among said plurality of memories on the basis of an access destination specified by each access portion (110, 120), and accesses the selected memory.

## Patentansprüche

1. Speichersystem (100) umfassend:
einen Speicher (15, 130);
mehrere Zugriffsabschnitte (11, 110, 120, 710, 510, 520) zum Zugreifen auf den Speicher und
eine Speicherschnittstelleneinheit (13, 270, 870, 470) zum Steuern des Zugriffs von den mehreren Zugriffsabschnitten auf den Speicher;
wobei das Speichersystem ferner umfasst:
mehrere Typen von Pfaden, die die jeweiligen Zugriffsabschnitte und die Speicherschnittstelleneinheit zur Kommunikation miteinander verbinden,
wobei die mehreren Typen von Pfaden einen Pfad (2) vom Antworttyp und einen Pfad (3) vom Durchsatztyp umfassen,
wobei der Pfad vom Antworttyp ein Pfad ist, bei dem die Menge an Informationen, die innerhalb des gleichen Zeitraums übertragen werden können, kleiner ist als die des Pfads vom Durchsatztyp, aber die Zeitdauer von dem Moment an, in dem Informationen gesendet werden, bis zu dem Moment, in dem eine Antwort darauf empfangen wird, kürzer ist als die des Pfads vom Durchsatztyp;
wobei der Pfad vom Durchsatztyp ein Pfad ist, bei dem die Zeitdauer von dem Moment an, in dem Informationen gesendet werden, bis zu dem Moment, in dem eine Antwort darauf empfangen wird, länger ist als die des Pfads vom Antworttyp, aber die Menge an Informationen, die innerhalb des gleichen Zeitraums übertragen werden können, größer ist als die des Pfads vom Antworttyp; und
die Speicherschnittstelleneinheit einen Arbiter (14) umfasst, der eine Priorität an einen Zugriff vom Pfad vom Antworttyp auf den Speicher über einen Zugriff vom Pfad vom Durchsatztyp auf den Speicher vergibt, wodurch vorzugsweise Zugriff vom Pfad vom Antworttyp auf den Speicher über Zugriff vom Pfad vom Durchsatztyp auf den Speicher erlaubt wird.

2. Speichersystem (100) nach Anspruch 1, wobei die Speicherschnittstelleneinheit (13, 270, 870, 470) vorzugsweise Zugriff über den Pfad (2) vom Antworttyp mit einem vorgegebenen Verhältnis erlaubt.

3. Speichersystem (100) nach Anspruch 2, wobei die Speicherschnittstelleneinheit (13, 270, 870, 470) jedes Mal, wenn die Anzahl von Malen, die vorzugsweise Zugriff über den Pfad (2) vom Antworttyp erlaubt wird, eine vorgegebene Anzahl (44) erreicht, Zugriff über den Pfad (3) vom Durchsatztyp erlaubt, ohne Zugriff vom Pfad vom Antworttyp bevorzugt zu erlauben.

4. Speichersystem (100) nach Anspruch 2 oder 3, wobei die Speicherschnittstelleneinheit (13, 270, 870, 470) Statistiken eines Kommunikationsmusters über den Pfad (2) vom Antworttyp und/oder den Pfad (3) vom Durchsatztyp berechnet, ein den berechneten Statistiken entsprechendes Verhältnis bestimmt und das bestimmte Verhältnis als das vorgeschriebene Verhältnis übernimmt.

5. Speichersystem (100) nach Anspruch 4, wobei die Speicherschnittstelleneinheit (13, 270, 870, 470), wenn sie Informationen über den Pfad (2) vom Antworttyp und den Pfad (3) vom Durchsatztyp empfängt, die Art, Größe und/oder Empfangszeit der empfangenen Informationen bestimmt, in Übereinstimmung mit den Ergebnissen dieses Bestimmungsvorgangs die Anzahl von Malen, die jede Informationsart empfangen wird, die Anzahl von Malen, die jeder Größenbereich von Informationen empfangen wird und/oder die Häufigkeit, mit der die Informationen empfangen werden, aufdatiert und die Statistiken auf der Grundlage der Anzahl von Malen, die jede Informationsart empfangen wird, der Anzahl von Malen, die jeder Größenbereich von Informationen empfangen wird, und/oder der Häufigkeit, mit der die Informationen empfangen werden, berechnet.

6. Speichersystem (100) nach einem der Ansprüche 1 bis 5, wobei sich zwischen den mehreren Zugriffsabschnitten (11, 110, 120, 710, 510, 520) und der Speicherschnittstelleneinheit (13, 270, 870, 470) kein Schalter auf dem Pfad (2) vom Antworttyp befindet oder die Anzahl von Schaltern (53, 451) auf dem Pfad vom Antworttyp kleiner ist als die Anzahl von Schaltern (51, 453) auf dem Pfad (3) vom Durchsatztyp.

7. Speichersystem (100) nach einem der Ansprüche 1 bis 6, wobei die Anzahl der Pfade (2) vom Antworttyp größer ist als die Anzahl der Pfade (3) vom Durchsatztyp.

8. Speichersystem (100) nach einem der Ansprüche 1 bis 7, wobei das Speichersystem mit einem externen Gerät (180, 281), das ein Gerät ist, das sich außerhalb des Systems befindet, zur Kommunikation mit diesem verbunden ist, wobei:
der Speicher ein Cache-Speicher (130) ist;
die Speicherschnittstelleneinheit ein Cache-Speicheradapter (270, 870, 470) ist, der den Zugriff auf den Cache-Speicher steuert;
wobei das Speichersystem ferner umfasst:
ein speicherplattenartiges Speichergerät (150);
einen Kanaladapter (110, 710, 510), der mit dem externen Gerät zur Kommunikation mit diesem verbunden ist; und
einen Speicherplattenadapter (120, 520), der mit dem speicherplattenartigen Speichergerät zur Kommunikation mit diesem verbunden ist,
wobei der Kanaladapter und der Speicherplattenadapter entweder eine Anweisung oder eine Antwort für einen anderen Kanaladapter oder Speicheradapter in den Cache-Speicher schreiben, indem sie die Anweisung oder die Antwort über den Pfad (2) vom Antworttyp an den Cache-Speicheradapter schicken, und/oder über den Pfad vom Antworttyp vom Cache-Speicheradapter entweder eine Anweisung oder eine Antwort empfangen, die in den Cache-Speicher geschrieben wird und an den Kanaladapter oder den Speicherplattenadapter selbst adressiert wird;
wobei der Kanaladapter und der Speicherplattenadapter die Daten in den Cache-Speicher schreiben, indem sie die Daten über den Pfad (3) vom Durchsatztyp an den Cache-Speicheradapter schicken, und/oder die Daten, die in den Cache-Speicher geschrieben werden, über den Pfad vom Antworttyp vom Cache-Speicheradapter empfangen;
wobei jeder der mehreren Zugriffsabschnitte entweder der Kanaladapter oder der Speicherplattenadapter ist.

9. Speichersystem (100) nach einem der Ansprüche 1 bis 7, wobei das Speichersystem mit einem externen Gerät (180, 281), das ein Gerät ist, das sich außerhalb des Systems befindet, zur Kommunikation mit diesem verbunden ist und umfasst:
einen Cache-Speicher (130);
ein speicherplattenartiges Speichergerät (150);
einen Kanaladapter (510), der Daten vom externen Gerät empfangen und die Daten in den Cache-Speicher schreiben kann und/oder Daten vom Cache-Speicher erhalten und die Daten an das externe Gerät schicken kann; und
einen Speicherplattenadapter (520), der in den Cache-Speicher geschriebene Daten erhalten und diese in das speicherplattenartige Speichergerät schreiben kann und/oder Daten vom speicherplattenartigen Speichergerät erhalten und diese in den Cache-Speicher schreiben kann,
wobei der Kanaladapter und der Speicherplattenadapter einen Mikroprozessor (512), einen lokalen Speicher (511) und eine mit den mehreren Typen von Pfaden verbundene Pfadschnittstelleneinheit umfassen;
wobei jeder der mehreren Zugriffsabschnitte der Mikroprozessor ist;
wobei der Speicher der lokale Speicher, der in noch einem anderen Kanal- oder Speicherplattenadapter angebracht ist, für den Mikroprozessor ist; und
wobei die Speicherschnittstelleneinheit die Pfadschnittstelleneinheit, die in noch einem anderen Kanal- oder Speicherplattenadapter angebracht ist, für den Mikroprozessor ist.

10. Speichersystem (100) nach einem der Ansprüche 1 bis 9, wobei das Speichersystem ein speicherplattenartiges Speichergerät (150) umfasst, und
wobei jeder der mehreren Zugriffsabschnitte (11, 110, 120, 710, 510, 520) einen Bestimmungsvorgang dahingehend ausführt, ob die Informationen in das speicherplattenartige Speichergerät zu schreibende Daten umfassen oder nicht, und/oder einen Bestimmungsvorgang dahingehend ausführt, ob die Größe der Informationen größer oder gleich einem vorgegebenen Wert ist oder nicht, und
jeder der mehreren Zugriffsabschnitte, wenn die Ergebnisse der Bestimmungsvorgänge angeben, dass die Informationen in das speicherplattenartige Speichergerät zu schreibende Daten umfassen und/oder die Größe der Informationen größer oder gleich dem vorgegebenen Wert sind, die Informationen über den Pfad (3) vom Durchsatztyp an die Speicherschnittstelleneinheit (13, 270, 870, 470) schickt, und
wobei jeder der mehreren Zugriffsabschnitte, wenn die Ergebnisse der Bestimmungsvorgänge angeben, dass die Informationen keine in das speicherplattenartige Speichergerät zu schreibenden Daten umfassen, und/oder die Größe der Informationen kleiner als der vorgegebene Wert ist, die Informationen über den Pfad (2) vom Antworttyp an die Speicherschnittstelleneinheit schickt.

11. Speichersystem (100) nach einem der Ansprüche 1 bis 9, wobei das Speichersystem ein speicherplattenartiges Speichergerät (150) umfasst,
wobei die Speicherschnittstelleneinheit (13, 270, 870, 470) einen Bestimmungsvorgang dahingehend ausführt, ob die Informationen Daten umfassen, die im speicherplattenartigen Speichergerät gespeichert sind oder nicht, und/oder einen Bestimmungsvorgang dahingehend ausführt, ob die Größe der Informationen größer oder gleich einem vorgegebenen Wert oder nicht ist, und
die Speicherschnittstelleneinheit, wenn die Ergebnisse der Bestimmungsvorgänge angeben, dass die Informationen im speicherplattenartigen Speichergerät gespeicherte Daten umfassen und/oder die Größe der Informationen größer gleich dem vorgegebenen Wert ist, die Informationen über den Pfad (3) vom Durchsatztyp an mindestens einen Zugriffsabschnitt (11, 110, 120, 710, 510, 520) schickt, und
die Speicherschnittstelleneinheit, wenn die Ergebnisse der Bestimmungsvorgänge angeben, dass die Informationen keine im speicherplattenartigen Speichergerät gespeicherte Daten umfassen und/oder die Größe der Informationen kleiner als der vorgegebene Wert ist, die Informationen über den Pfad (2) vom Antworttyp an mindestens einen Zugriffsabschnitt schickt.

12. Speichersystem (100) nach einem der Ansprüche 1 bis 11, wobei über den Pfad (2) vom Antworttyp empfangene Informationen und über den Pfad (3) vom Durchsatztyp empfangene Informationen in der gleichen Region des Speichers (15, 130) gemischt werden oder entweder eine Anweisung oder eine Antwort sowie in einem speicherplattenartigen Speichergerät (150) zu speichernde Daten in der gleichen Region des Speichers gemischt werden.

13. Speichersystem (100) nach einem der Ansprüche 1 bis 12, wobei ein erster und ein zweiter Speicherbereich im Speicher (15, 130) vorgesehen sind,
wobei über den Pfad (2) vom Antworttyp empfangene Informationen oder entweder eine Anweisung oder eine Antwort im ersten Speicherbereich gespeichert werden,
über den Pfad (3) vom Durchsatztyp empfangene Informationen oder in einem speicherplattenartigen Speichergerät (150) zu speichernde Daten im zweiten Speicherbereich gespeichert werden, und
die jeweiligen Größen des ersten und des zweiten Speicherbereichs entweder fest oder variabel sind.

14. Speichersystem (100) nach Anspruch 4 oder irgendeinem von Anspruch 4 abhängigen Anspruch, wobei ein erster und ein zweiter Speicherbereich im Speicher (15, 130) vorgesehen sind,
wobei über den Pfad (2) vom Antworttyp empfangene Informationen oder entweder eine Anweisung oder eine Antwort im ersten Speicherbereich gespeichert werden,
über den Pfad (3) vom Durchsatztyp empfangene Informationen oder in einem speicherplattenartigen Speichergerät (150) zu speichernde Daten im zweiten Speicherbereich gespeichert werden, und
sich die Größen des ersten und des zweiten Speicherbereichs dynamisch entsprechend dem vorgegebenen Verhältnis verändern.

15. Speichersystem nach einem der Ansprüche 1 bis 12, wobei ein erster, ein zweiter und ein dritter Speicherbereich im Speicher (15, 130) vorgesehen sind,
wobei über den Pfad (2) vom Antworttyp empfangene Informationen oder entweder eine Anweisung oder eine Antwort im ersten Speicherbereich gespeichert werden,
über den Pfad (3) vom Durchsatztyp empfangene Informationen oder in einem speicherplattenartigen Speichergerät (150) zu speichernde Daten im zweiten Speicherbereich gespeichert werden, und
entweder der gesamte dritte Speicherbereich oder ein Teil davon dynamisch an den ersten und/oder den zweiten Speicherbereich alloziert wird oder entweder der gesamte dritte Speicherbereich oder ein Teil davon dynamisch vom ersten und/oder vom zweiten Speicherbereich freigegeben wird.

16. Speichersystem (100) nach einem der Ansprüche 1 bis 15, wobei mehrere Speicher (15, 130) mit der Speicherschnittstelleneinheit (13, 270, 870, 470) verbunden sind und
die Speicherschnittstelleneinheit einen Speicher aus den mehreren Speichern auf der Grundlage eines Zugriffsziels, das von jedem Zugriffsabschnitt (110, 120) spezifiziert worden ist, auswählt und auf den ausgewählten Speicher zugreift.

## Revendications

1. Système de mémorisation (100), comportant :
une mémoire (15, 130),
une pluralité de parties d'accès (11, 110, 120, 710, 510, 520) pour accéder à ladite mémoire, et
une unité d'interface de mémoire (13, 270, 870, 470) pour commander l'accès à ladite mémoire depuis ladite pluralités de parties d'accès,
dans lequel le système de mémorisation comporte en outre :
une pluralité de types de trajets connectant en communication les parties d'accès respectives et ladite unité d'interface de mémoire,
dans lequel ladite pluralité de types de trajets comporte un trajet de type réponse (2) et un trajet de type débit (3),
ledit trajet de type réponse est un trajet à travers lequel la quantité d'informations pouvant être transférée pendant la même période de temps est inférieure à celle dudit trajet de type débit, mais la durée depuis le moment où les informations sont envoyées jusqu'à ce qu'une réponse à celles-ci soit reçue est plus courte que celle dudit trajet de type débit,
ledit trajet de type débit est un trajet à travers lequel la durée depuis le moment où des informations sont envoyées jusqu'à ce qu'une réponse à celles-ci soit reçue est plus longue que celle dudit trajet de type réponse, mais la quantité d'informations pouvant être transférée au cours de la même période de temps est supérieure à celle dudit trajet de type réponse, et
ladite unité d'interface de mémoire comporte un arbitre (14) lequel place une priorité sur un accès à ladite mémoire via ledit trajet de type réponse par rapport à un accès à ladite mémoire via ledit trajet de type débit, permettant ainsi de manière préférentielle l'accès à ladite mémoire via ledit trajet de type réponse par rapport à l'accès à ladite mémoire via ledit trajet de type débit.

2. Système de mémorisation (100) selon la revendication 1, dans lequel ladite unité d'interface de mémoire (13, 270, 870, 470) permet de manière préférentielle l'accès via ledit trajet de type réponse (2) à un rapport prescrit.

3. Système de mémorisation (100) selon la revendication 2, dans lequel à chaque fois que le nombre de fois qu'un accès préférentiel est autorisé via ledit trajet de type réponse (2) atteint un nombre prédéterminé (44), ladite unité d'interface de mémoire (13, 270, 870, 470) permet l'accès via ledit trajet de type débit (3) sans permettre de manière préférentielle l'accès via ledit trajet de type réponse.

4. Système de mémorisation (100) selon la revendication 2 ou la revendication 3, dans lequel ladite unité d'interface de mémoire (13, 270, 870, 470) calcule des statistiques d'un modèle de communication via au moins l'un dudit trajet de type réponse (2) et dudit trajet de type débit (3), détermine un rapport correspondant aux statistiques calculées, et prend ledit rapport déterminé en tant que ledit rapport prescrit.

5. Système de mémorisation (100) selon la revendication 4, dans lequel, lorsque ladite unité d'interface de mémoire (13, 270, 870, 470) reçoit des informations via au moins l'un dudit trajet de type réponse (2) et dudit trajet de type débit (3), ladite unité d'interface de mémoire détermine au moins l'un parmi ledit type d'informations reçues, la taille, ou l'heure de réception, et conformément aux résultats de cette détermination, met à jour au moins l'un parmi le nombre de fois que chaque type d'informations est reçu, le nombre de fois que chaque plage de taille d'informations est reçue, et la fréquence selon laquelle les informations sont reçues, et calcule lesdites statistiques sur la base d'au moins l'un parmi le nombre de fois que chaque type d'informations est reçu, le nombre de fois que chaque plage de taille d'informations est reçue, et la fréquence selon laquelle les informations sont reçues.

6. Système de mémorisation (100) selon l'une quelconque des revendications 1 à 5, dans lequel entre ladite pluralité de parties d'accès (11, 110, 120, 710, 510, 520) et ladite unité d'interface de mémoire (13, 270, 870, 470), il n'existe pas de commutateur sur ledit trajet de type réponse (2), ou le nombre de commutateurs (53, 451) sur ledit trajet de type réponse est inférieur au nombre de commutateurs (51, 453) sur ledit trajet de type débit (3).

7. Système de mémorisation (100) selon l'une quelconque des revendications 1 à 6, dans lequel le nombre desdits trajets de type réponse (2) est supérieur au nombre desdits trajets de type débit (3).

8. Système de mémorisation (100) selon l'une quelconque des revendications 1 à 7, dans lequel ledit système de mémorisation est connecté en communication à un dispositif externe (180, 281), lequel est un dispositif qui existe en externe à celui-ci, dans lequel :
ladite mémoire est une mémoire cache (130),
ladite unité d'interface de mémoire est un adaptateur de mémoire cache (270, 870, 470), lequel commande l'accès à ladite mémoire cache,
le système de mémorisation comportant en outre :
un dispositif de mémorisation de type disque (150),
un adaptateur de canal (110, 710, 510), lequel est connecté en communication audit dispositif externe, et
un adaptateur de disque (120, 520), lequel est connecté en communication audit dispositif de mémorisation de type disque,
dans lequel ledit adaptateur de canal et ledit adaptateur de disque écrivent soit une instruction soit une réponse pour un autre adaptateur de canal ou un autre adaptateur de disque dans ladite mémoire cache en envoyant l'instruction ou la réponse audit adaptateur de mémoire cache via ledit trajet de type réponse (2) et/ou reçoivent en provenance dudit adaptateur de mémoire cache via ledit trajet de type réponse soit une instruction soit une réponse qui est écrite dans ladite mémoire cache et adressée audit adaptateur de canal ou à l'adaptateur de disque lui-même,
ledit adaptateur de canal et ledit adaptateur de disque écrivent lesdites données dans ladite mémoire cache en envoyant les données audit adaptateur de mémoire cache via ledit trajet de type débit (3), et/ou reçoivent lesdites données, lesquelles sont écrites dans ladite mémoire cache, en provenance dudit adaptateur de mémoire cache via ledit trajet de type réponse,
chaque partie parmi ladite pluralité de parties d'accès est soit ledit adaptateur de canal soit ledit adaptateur de disque.

9. Système de mémorisation (100) selon l'une quelconque des revendications 1 à 7, dans lequel ledit système de mémorisation est connecté en communication à un dispositif externe (180, 281), lequel est un dispositif qui existe en externe à celui-ci, et comporte :
une mémoire cache (130),
un dispositif de mémorisation de type disque (150),
un adaptateur de canal (510), lequel peut recevoir des données en provenance dudit dispositif externe et écrire les données dans ladite mémoire cache, et/ou peut acquérir des données depuis ladite mémoire cache, et envoyer des données audit dispositif externe, et
un adaptateur de disque (520), lequel peut acquérir des données écrites dans ladite mémoire cache, et écrire les données dans ledit dispositif de mémorisation de type disque, et/ou peut acquérir des données depuis ledit dispositif de mémorisation de type disque, et écrire les données dans ladite mémoire cache,
dans lequel ledit adaptateur de canal et ledit adaptateur de disque comportent un microprocesseur (512), une mémoire locale (511), et une unité d'interface de trajet connectée à ladite pluralité de types de trajets,
chaque partie parmi ladite pluralité de parties d'accès est ledit microprocesseur,
ladite mémoire est ladite mémoire locale, laquelle est montée soit dans un autre adaptateur de canal soit dans un autre adaptateur de disque, pour ledit microprocesseur, et
ladite unité d'interface de mémoire est ladite unité d'interface de trajet, laquelle est montée soit dans un autre adaptateur de canal soit dans un autre adaptateur de disque pour ledit microprocesseur.

10. Système de mémorisation (100) selon l'une quelconque des revendications 1 à 9, dans lequel ledit système de mémorisation comporte un dispositif de mémorisation de type disque (150), et
chaque partie parmi ladite pluralité de parties d'accès (11, 110, 120, 710, 510, 520) détermine si oui ou non des informations comportent des données à écrire dans ledit dispositif de mémorisation de type disque, et/ou détermine si oui ou non la taille desdites informations est égale à une valeur prédéterminée ou supérieure, et
lorsque les résultats desdites déterminations indiquent que les informations comportent des données à écrire dans ledit dispositif de mémorisation de type disque, et/ou que la taille desdites informations est égale à la valeur prédéterminée ou supérieure, chaque partie parmi ladite pluralité de parties d'accès envoie lesdites informations à ladite unité d'interface de mémoire (13, 270, 870, 470) via ledit trajet de type débit (3), et
lorsque les résultats desdites déterminations indiquent que les informations ne comportent pas de données à écrire dans ledit dispositif de mémorisation de type disque, et/ou que la taille desdites informations est inférieure à la valeur prédéterminée, chaque partie parmi ladite pluralité de parties d'accès envoie lesdites informations à ladite unité d'interface de mémoire via ledit trajet de type réponse (2).

11. Système de mémorisation (100) selon l'une quelconque des revendications 1 à 9, dans lequel ledit système de mémorisation comporte un dispositif de mémorisation de type disque (150),
ladite unité d'interface de mémoire (13, 270, 870, 470) détermine si oui ou non des informations comportent des données, lesquelles sont mémorisées dans ledit dispositif de mémorisation de type disque, et/ou détermine si oui ou non la taille desdites informations est égale à une valeur prédéterminée ou supérieure, et
lorsque les résultats de ladite détermination indiquent que les informations comportent des données mémorisées dans ledit dispositif de mémorisation de type disque, et/ou que la taille desdites informations est égale à la valeur prédéterminée ou supérieure, ladite unité d'interface de mémoire envoie lesdites informations à au moins une partie d'accès (11, 110, 120, 710, 510, 520) via ledit trajet de type débit (3), et
lorsque les résultats desdites déterminations indiquent que les informations ne comportent pas de données mémorisées dans ledit dispositif de mémorisation de type disque, et/ou que la taille desdites informations est égale à la valeur prédéterminée ou supérieure, ladite unité d'interface de mémoire envoie lesdites informations à au moins une partie d'accès via ledit trajet de type réponse (2).

12. Système de mémorisation (100) selon l'une quelconque des revendications 1 à 11, dans lequel des informations reçues via ledit trajet de type réponse (2), et des informations reçues via ledit trajet de type débit (3) sont mélangées dans la même région de ladite mémoire (15, 130), ou soit une instruction soit une réponse, et des données à mémoriser dans un dispositif de mémorisation de type disque (150) sont mélangées dans la même région de ladite mémoire.

13. Système de mémorisation (100) selon l'une quelconque des revendications 1 à 12, dans lequel une première zone de mémorisation et une deuxième zone de mémorisation sont fournies dans ladite mémoire (15, 130),
des informations reçues via ledit trajet de type réponse (2), ou soit une instruction soit une réponse, sont mémorisées dans ladite première zone de mémorisation,
des informations reçues via ledit trajet de type débit (3), ou des données à mémoriser un dispositif de mémorisation de type disque (150) sont mémorisées dans ladite deuxième zone de mémorisation, et
les tailles respectives de ladite première zone de mémorisation et de ladite deuxième zone de mémorisation sont soient fixes, soient variables.

14. Système de mémorisation (100) selon la revendication 4 ou toute revendication quelconque dépendante de la revendication 4, dans lequel une première zone de mémorisation et une deuxième zone de mémorisation sont agencées dans ladite mémoire (15, 130),
des informations reçues via ledit trajet de type réponse (2), ou soit une instruction soit une réponse sont mémorisées dans ladite première zone de mémorisation,
des informations reçues via ledit trajet de type débit (3), ou des données à mémoriser dans un dispositif de mémorisation de type disque (150) sont mémorisées dans ladite deuxième zone de mémorisation, et
les tailles de ladite première zone de mémorisation et de ladite deuxième zone de mémorisation changent dynamiquement de taille conformément audit rapport déterminé.

15. Système de mémorisation (100) selon l'une quelconque des revendications 1 à 12, dans lequel une première zone de mémorisation, une deuxième zone de mémorisation, et une troisième zone de mémorisation sont agencées dans ladite mémoire (15, 130),
des informations reçues via ledit trajet de type réponse (2), ou soit une instruction soit une réponse sont mémorisées dans ladite première zone de mémorisation,
des informations reçues via ledit trajet de type débit (3), ou des données à mémoriser dans un dispositif de mémorisation de type disque (150) sont mémorisées dans ladite deuxième zone de mémorisation, et
soit la totalité soit une partie de ladite troisième zone de mémorisation est dynamiquement attribuée à ladite première zone de mémorisation et/ou à ladite deuxième zone de mémorisation, ou soit la totalité soit une partie de ladite troisième zone de mémorisation est dynamiquement libérée de ladite première zone de mémorisation et/ou de ladite deuxième zone de mémorisation.

16. Système de mémorisation (100) selon l'une quelconque des revendications 1 à 15, dans lequel une pluralité de mémoires (15, 130) sont connectées à ladite unité d'interface de mémoire (13, 270, 870, 470), et
ladite unité d'interface de mémoire sélectionne une mémoire parmi ladite pluralité de mémoires sur la base d'une destination d'accès spécifiée par chaque partie d'accès (110, 120), et accède à la mémoire sélectionnée.
